# EUROPEAN PATENT APPLICATION

(11) **EP 4 596 271 A1**
(43) Date of publication of application: **06.08.2025**
(21) Application number: 22959806.5
(22) Date of filing: 27.09.2022
(51) Int. Cl.: B60H 1/00

(54) **THERMAL MANAGEMENT SYSTEM OF VEHICLE, AND VEHICLE**

(71) Applicant: SAIC MOTOR Corporation Limited, Shanghai 201203 (CN)
(72) Inventor: NIU, Fengxian, Shanghai 201804 (CN); Li, Jie, Shanghai 201804 (CN); LIU, Fei, Shanghai 201804 (CN); ZHANG, Xinglong, Shanghai 201804 (CN); WANG, Lei, Shanghai 201804 (CN)
(74) Representative: Grassi, Stefano
(86) International application number: PCT/CN2022/121579
(87) International publication number: WO 2024/065154

(57) **Abstract**

Disclosed in the present invention are a thermal management system of a vehicle, and a vehicle. The thermal management system includes a refrigerant circulation system and a cooling liquid circulation system. The refrigerant circulation system includes a compressor, a first heat exchanger, a first expansion valve, a second heat exchanger, a third heat exchanger, a second expansion valve and a first flow path switching component. The first heat exchanger has a refrigerant channel and an electric drive cooling liquid channel which are independent and capable of transferring heat; the second heat exchanger has a refrigerant channel and a passenger compartment cooling liquid channel which are independent and capable of transferring heat; and the third heat exchanger has a refrigerant channel and a battery cooling liquid channel which are independent and capable of transferring heat. The cooling liquid circulation system includes a passenger compartment cooling liquid circulation system and an engine room cooling liquid circulation system. The passenger compartment cooling liquid circulation system includes a first water pump and a cold-hot core. The engine room cooling liquid circulation system includes an electric drive circulation loop, a battery circulation loop and a second flow path switching component. The thermal management system is applicable to a refrigerant needing a secondary loop, and the system has a small number of parts.

## Description

### Technical Field

The present invention relates to the technical field of thermal management of vehicles, in particular to a thermal management system of a vehicle, and a vehicle.

### Background

With the rapid development of the new energy technology, the integration efficiency requirements for air conditioner thermal management are becoming increasingly high, posing higher challenges to the air conditioner thermal management technology. The air conditioner thermal management technology mainly needs to solve the problem of passenger compartment thermal management and the problem of battery thermal management.

Heating solutions for passenger compartment thermal management:
Solutions for passenger compartment thermal management mainly include water-side high-voltage electric heaters or air-side high-voltage electric heaters, and the heating efficiencies of the two solutions are less than 1. In order to increase the heating efficiency, a heat pump function is added for some vehicle models based on a refrigerant circulation loop. However, the refrigerant loop in the heat pump technology is additionally provided with more auxiliary components, resulting in relatively complex structure and relatively high cost. Moreover, when at a low temperature (such as -10°C), due to the characteristics of a refrigerant and the frosting problem of an outdoor heat exchanger, it is also necessary to retain a high-pressure electric heating solution.

In addition, some vehicle models can use motor stalling for heating as a heat source of a heat pump system, but the heating efficiency of motor stalling is very low. Moreover, a permanent magnet synchronous motor cannot achieve motor stalling for heating, so vehicle models provided with the permanent magnet synchronous motor cannot use motor stalling for heating as the heat source of the heat pump system.

Solutions for thermal management system for batteries:
For a pure electric vehicle, in order to avoid a low temperature affecting the charging efficiency and charging time of a battery, a battery heating system is also provided generally. A commonly used battery heating system includes a PTC (heating element) inside a battery; and by additionally providing a water-side high-voltage electric heater in a battery cooling liquid loop, the cooling liquid is heated at a low temperature, and then, the heating of the battery is completed by the cooling liquid through a water cooling plate at the bottom of the battery. However, the heating efficiencies of the two heating modes are relatively low. Moreover, a battery heating system and a passenger compartment heating system generally require two sets of auxiliary high-voltage electric heaters, which is not friendly to system cost and entire vehicle layout.

In addition, the GWP (global warming potential) of the current R134a refrigerant exceeds 1300, which does not comply with the requirement of environmental regulations. For R290 refrigerant, one of the one feasibility, due to its flammability, a secondary loop is required to avoid the danger caused by excessive refrigerant pressure. Moreover, the refrigerant needs to exchange heat with the cooling liquid for cooling, heating and dehumidification of a passenger compartment, heating and cooling of a battery as well as cooling and excess heat utilization of a motor, so very complex water-side multi-way valves are required, and the loop design is complex, resulting in certain constraints on the development of the refrigerant.

Therefore, a thermal management system of a vehicle in the prior art has the problem of a large number of parts, complex loops and inability to adapt to refrigerants needing secondary loops.

### Summary

The objective of the present invention is to solve the problem of a large number of parts, complex loops and inability to adapt to refrigerants needing secondary loops in a thermal management system of a vehicle in the prior art.

In order to solve the above problem, an implementation of the present invention provides a thermal management system of a vehicle, including: a refrigerant circulation system, wherein the refrigerant circulation system includes a compressor, a first heat exchanger, a first expansion valve, a second heat exchanger, a third heat exchanger, a second expansion valve and a first flow path switching component; the first heat exchanger has a refrigerant channel and an electric drive cooling liquid channel which are independent of each other and capable of transferring heat; the second heat exchanger has a refrigerant channel and a passenger compartment cooling liquid channel which are independent of each other and capable of transferring heat; the third heat exchanger has a refrigerant channel and a battery cooling liquid channel which are independent of each other and capable of transferring heat; a first end of the refrigerant channel of the first heat exchanger is respectively connected with a first end of the first expansion valve and a first end of the second expansion valve; a second end of the first expansion valve is connected with a first end of the refrigerant channel of the second heat exchanger, a second end of the second expansion valve is connected with a first end of the refrigerant channel of the third heat exchanger, and the first expansion valve and the second expansion valve are arranged in a parallel manner;
the first flow path switching component is arranged among the compressor, a second end of the refrigerant channel of the first heat exchanger, a second end of the refrigerant channel of the second heat exchanger and a second end of the refrigerant channel of the third heat exchanger, so as to selectively communicate the second end of the refrigerant channel of the second heat exchanger, a first end of the compressor, a second end of the compressor and the second end of the refrigerant channel of the first heat exchanger in sequence, and communicate the second end of the refrigerant channel of the third heat exchanger, the first end of the compressor, the second end of the compressor and the second end of the refrigerant channel of the first heat exchanger in sequence, so that the first heat exchanger can be used as a condenser, and both the second heat exchanger and the third heat exchanger can be used as evaporators;
or communicate the second end of the refrigerant channel of the first heat exchanger, a first end of the compressor, a second end of the compressor and the second end of the refrigerant channel of the second heat exchanger in sequence, and communicate the second end of the refrigerant channel of the first heat exchanger, the first end of the compressor, the second end of the compressor and the second end of the refrigerant channel of the third heat exchanger in sequence, so that the first heat exchanger can be used as an evaporator, and both the second heat exchanger and the third heat exchanger can be used as condensers; and
a cooling liquid circulation system, wherein the cooling liquid circulation system includes: a passenger compartment cooling liquid circulation system, the passenger compartment cooling liquid channel of the second heat exchanger being connected with the passenger compartment cooling liquid circulation system; and
an engine room cooling liquid circulation system, the engine room cooling liquid circulation system including an electric drive circulation loop and a battery circulation loop, wherein a first end of the electric drive circulation loop is connected with a first end of the electric drive cooling liquid channel of the first heat exchanger, and a second end of the electric drive circulation loop is connected with a second end of the electric drive cooling liquid channel of the first heat exchanger; and a first end of the battery circulation loop is connected with a first end of the battery cooling liquid channel of the third heat exchanger, and a second end of the battery circulation loop is connected with a second end of the battery cooling liquid channel of the third heat exchanger.

By adopting the above technical solution, in the refrigerant circulation system, a refrigerant can respectively flow through a loop of the first expansion valve and the second heat exchanger and a loop of the second expansion valve and the third heat exchanger, which are connected in parallel, so that an environmentally-friendly refrigerant with flammability can exchange heat through the two loops connected in parallel to avoid the danger of combustion caused by excessive refrigerant filling and leakage into the passenger compartment. Therefore, the thermal management system of the vehicle has the advantage of being applicable to refrigerants needing secondary loops.

Moreover, the refrigerant circulation system can exchange heat with the passenger compartment cooling liquid circulation system, the electric drive circulation loop and the battery circulation loop through the first heat exchanger, the second heat exchanger and the third heat exchanger. When the temperature of the external environment is relatively high, the first heat exchanger is used as a condenser to release heat, and both the second heat exchanger and the third heat exchanger are used as evaporators to absorb heat. At this time, the passenger compartment cooling liquid subjected to heat exchange and cooling by the second heat exchanger can be conveyed into the passenger compartment cooling liquid circulation system to absorb the heat of the passenger compartment, so as to cool the passenger compartment. The battery cooling liquid subjected to heat exchange and cooling by the third heat exchanger can be conveyed into the battery circulation loop to cool the battery, thereby avoiding the impact of a high temperature on the performance of the battery. The electric drive cooling liquid subjected to heat exchange and heating by the first heat exchanger can be conveyed into the electric drive circulation loop, and the heat is transferred into the external environment through the electric drive circulation loop. When the temperature of the external environment is relatively low, the first heat exchanger is used as an evaporator to absorb heat, both the second heat exchanger and the third heat exchanger are used as condensers to release heat, the passenger compartment cooling liquid subjected to heat exchange and heating by the second heat exchanger can be conveyed into the passenger compartment cooling liquid circulation system, and the heat is released to the passenger compartment, so as to supply the heat to the passenger compartment. The battery cooling liquid subjected to heat exchange and heating by the third heat exchanger can be conveyed into the battery circulation loop to heat the battery, thereby avoiding the impact of a low temperature on the performance of the battery. The electric drive cooling liquid subjected to heat exchange and cooling by the first heat exchanger can be conveyed into the electric drive circulation loop to absorb electric drive excess heat and environmental heat, so as to fully utilize the energy in the thermal management system, thereby improving the energy utilization rate in the thermal management system. Therefore, the thermal management system of the vehicle can complete the cooling or heating of the passenger compartment and battery through the heat exchange of the heat exchanger by controlling the flow direction of the refrigerant, without the need to additionally provide components such as electric heaters on the sides of the passenger compartment and the battery, thereby greatly reducing the number of parts in the thermal management system of the vehicle, and greatly reducing the complexity of the loop.

**In** addition, the thermal management system generates heat through a self-circulation process of the refrigerant, without the need for high-speed rotating components such as motors to generate heat, so the reliability of the refrigerant circulation system is higher. Furthermore, the heating efficiency is also higher than the heating efficiency of motor stalling.

According to another specific implementation of the present invention, the present invention discloses a thermal management system of a vehicle, wherein the passenger compartment cooling liquid circulation system includes a first water pump and a cold-hot core; and an output end of the first water pump communicates with an input end of the cold-hot core, an output end of the cold-hot core communicates with an input end of the passenger compartment cooling liquid channel of the second heat exchanger, and an output end of the passenger compartment cooling liquid channel of the second heat exchanger communicates with an input end of the first water pump.

By adopting the above technical solution, when the temperature of the external environment is relatively high, the first water pump conveys the passenger compartment cooling liquid subjected to heat exchange and cooling by the second heat exchanger to the cold-hot core (used as a cold core at this time) of the passenger compartment, so as to cool the passenger compartment. When the temperature of the external environment is relatively low, the first water pump can convey the passenger compartment cooling liquid subjected to heat exchange and heating by the second heat exchanger to the cold-hot core (used as a hot core at this time) of the passenger compartment, so as to supply heat to the passenger compartment. **In** the passenger compartment cooling liquid circulation system, the first water pump can drive the passenger compartment cooling liquid to flow into the passenger compartment cooling liquid circulation system, so as to increase the flow velocity of the passenger compartment cooling liquid, thereby improving the heat exchange efficiency of the passenger compartment. The cold-hot core can absorb more heat from the passenger compartment or release more heat into the passenger compartment, thereby improving the heat exchange effect of the passenger compartment.

According to another specific implementation of the present invention, the present invention discloses a thermal management system of a vehicle, wherein the engine room cooling liquid circulation system further includes a second flow path switching component, and the second flow path switching component is arranged between the electric drive circulation loop and the battery circulation loop, so as to selectively arrange the electric drive circulation loop and the battery circulation loop in a mutually independent manner, or arrange the electric drive circulation loop and the battery circulation loop in a serial manner.

By adopting the above technical solution, when the electric drive circulation loop and the battery circulation loop are arranged in the mutually independent manner, through the heat exchange between the electric drive cooling liquid of the first heat exchanger and the refrigerant, the refrigerant circulation system can exchange heat with the electric drive circulation loop. Through the heat exchange between the battery cooling liquid of the third heat exchanger and the refrigerant, the refrigerant circulation system can exchange heat with the battery circulation loop. When the electric drive circulation loop and the battery circulation loop are arranged in the serial manner, the first heat exchanger and the third heat exchanger are connected in series, and the cooling liquid can flow from the third heat exchanger to the first heat exchanger, so that in extreme cold weather, the heat released by using the third heat exchanger as a condenser is transferred to the first heat exchanger, and the heat is transmitted into the refrigerant circulation system through the heat exchange between the cooling liquid in the first heat exchanger and the refrigerant, so as to maintain the self-circulation operation of the refrigerant circulation system at a low temperature. Furthermore, since the refrigerant channel in the first heat exchanger communicates with the refrigerant channel in the second heat exchanger, the refrigerant in the first heat exchanger can also flow through the refrigerant channel in the second heat exchanger; and through the heat exchange between the passenger compartment cooling liquid in the second heat exchanger and the refrigerant, the excess heat in the refrigerant circulation system is transmitted into the passenger compartment cooling liquid circulation system and released into the passenger compartment to generate heat, so as to omit an air-assisted electric heater or a high-pressure water heater on a cooling liquid side in a passenger compartment in a traditional thermal management system, thereby greatly reducing the number of parts in the thermal management system of the vehicle, and greatly reducing the complexity of the loop. Moreover, when the electric drive circulation loop and the battery circulation loop are connected in series, the battery can be heated by the electric drive excess heat, and the heat of the battery can also be released into the external environment through the electric drive circulation loop.

According to another specific implementation of the present invention, the present invention discloses a thermal management system of a vehicle, wherein the first flow path switching component is configured as a first four-way valve. The first four-way valve has a first interface, a second interface, a third interface and a fourth interface, the first interface is connected with the second end of the compressor, the second interface is respectively connected with the second end of the refrigerant channel of the second heat exchanger and the second end of the refrigerant channel of the third heat exchanger, the third interface is connected with the first end of the compressor, and the fourth interface is connected with the second end of the refrigerant channel of the first heat exchanger.

When the first interface of the first four-way valve communicates with the fourth interface and the second interface communicates with the third interface, the second end of the refrigerant channel of the second heat exchanger, the second interface of the first four-way valve, the third interface, the first end of the compressor, the second end of the compressor, the first interface of the first four-way valve, the fourth interface, the second end of the refrigerant channel of the first heat exchanger, the first end of the refrigerant channel of the first heat exchanger, the first expansion valve and the first end of the refrigerant channel of the second heat exchanger can communicate in sequence to form a first refrigerant circulation loop; and the second end of the refrigerant channel of the third heat exchanger, the second interface of the first four-way valve, the third interface, the first end of the compressor, the second end of the compressor, the first interface of the first four-way valve, the fourth interface, the second end of the refrigerant channel of the first heat exchanger, the first end of the refrigerant channel of the first heat exchanger, the second expansion valve and the first end of the refrigerant channel of the third heat exchanger can communicate in sequence to form a second refrigerant circulation loop.

When the first interface of the first four-way valve communicates with the second interface and the third interface communicates with the fourth interface, the second end of the refrigerant channel of the first heat exchanger, the fourth interface of the first four-way valve, the third interface, the first end of the compressor, the second end of the compressor, the first interface of the first four-way valve, the second interface, the second end of the refrigerant channel of the second heat exchanger, the first end of the refrigerant channel of the second heat exchanger, the first expansion valve and the first end of the refrigerant channel of the first heat exchanger can communicate in sequence to form a third refrigerant circulation loop; and the second end of the refrigerant channel of the first heat exchanger, the fourth interface of the first four-way valve, the third interface, the first end of the compressor, the second end of the compressor, the first interface of the first four-way valve, the second interface, the second end of the refrigerant channel of the third heat exchanger, the first end of the refrigerant channel of the third heat exchanger, the second expansion valve and the first end of the refrigerant channel of the first heat exchanger can communicate in sequence to form a fourth refrigerant circulation loop.

By adopting the above technical solution, when the first interface of the first four-way valve communicates with the fourth interface and the second interface communicates with the third interface, the high-temperature and high-pressure gaseous refrigerant flowing out of the compressor flows into the refrigerant channel in the first heat exchanger through the first interface and the fourth interface of the first four-way valve, and the heat is transmitted to the electric drive cooling liquid in the first heat exchanger, so that the first heat exchanger is used as a condenser to release heat to the engine room cooling liquid circulation system. The refrigerant flowing out of the refrigerant channel in the first heat exchanger becomes a low-temperature and high-pressure liquid refrigerant, then after passing through the first expansion valve, part of the refrigerant becomes a low-temperature and low-pressure liquid refrigerant and flows into the refrigerant channel in the second heat exchanger, and the heat of the passenger compartment cooling liquid in the second heat exchanger is absorbed, so that the second heat exchanger is used as an evaporator to absorb the heat in the passenger compartment. After passing through the second expansion valve, the other part of the refrigerant becomes a low-temperature and low-pressure liquid refrigerant and then flows into the refrigerant channel in the third heat exchanger, and the heat of the battery cooling liquid in the third heat exchanger is absorbed, so that the third heat exchanger is used as an evaporator to absorb the heat of the battery. The refrigerant flowing out of the refrigerant channel in the second heat exchanger and the refrigerant flowing out of the refrigerant channel in the third heat exchanger become high-temperature and low-pressure liquid refrigerants which flow into the compressor through the second interface and the third interface of the first four-way valve and become high-temperature and high-pressure gaseous refrigerant through the compressor, so as to perform the next circulation flow.

When the first interface of the first four-way valve communicates with the second interface and the third interface communicates with the fourth interface, part of the high-temperature and high-pressure gaseous refrigerant flowing out of the compressor flows into the refrigerant channel in the second heat exchanger through the first interface and the second interface of the first four-way valve, and the heat is transmitted to the passenger compartment cooling liquid in the second heat exchanger, so that the second heat exchanger is used as a condenser to release heat into the passenger compartment. The refrigerant flowing out of the refrigerant channel of the second heat exchanger becomes a low-temperature and high-pressure liquid refrigerant which then passes through the first expansion valve to become a low-temperature and low-pressure liquid refrigerant. The other part of the high-temperature and high-pressure gaseous refrigerant flowing out of the compressor flows into the refrigerant channel in the third heat exchanger, and the heat is transmitted to the battery cooling liquid in the third heat exchanger, so that the third heat exchanger is used as a condenser to release heat to the battery. The refrigerant flowing out of the refrigerant channel of the third heat exchanger becomes a low-temperature and high-pressure liquid refrigerant which then passes through the second expansion valve to become a low-temperature and low-pressure liquid refrigerant. Then, the low-temperature and low-pressure liquid refrigerants flowing out of the first expansion valve and the second expansion valve flow into the refrigerant channel in the first heat exchanger, so that the first heat exchanger is used as an evaporator to absorb the electric drive excess heat and the heat in the environment through the engine room cooling liquid circulation system. The refrigerant flowing out of the refrigerant channel in the first heat exchanger becomes a high-temperature and low-pressure liquid refrigerant which then flows into the compressor through the fourth interface and the third interface of the first four-way valve and becomes a high-temperature and high-pressure gaseous refrigerant through the compressor, so as to perform the next circulation flow.

Therefore, the thermal management system of the vehicle can convert the flow direction of the refrigerant in the refrigerant circulation system through the direction change of the first four-way valve by arranging the first four-way valve in the refrigerant circulation system. Thus, when the temperature of the external environment is relatively high, the first heat exchanger is used as a condenser to release heat, and the second heat exchanger and the third heat exchanger are used as evaporators to absorb heat. When the temperature of the external environment is relatively low, the first heat exchanger is used as an evaporator to absorb heat, and the second heat exchanger and the third heat exchanger are used as condensers to release heat. That is to say, in the refrigerant circulation system, the cooling or heating function of the first heat exchanger with the second heat exchanger and the third heat exchanger can be changed only through the direction change of the first four-way valve, without the need to additionally provide components such as electric heaters on the sides of the passenger compartment and the battery, thereby greatly reducing the number of parts in the thermal management system of the vehicle, and greatly reducing the complexity of the loop. Moreover, the thermal management system of the vehicle can also fully utilize the electric drive excess heat and the cooling liquid heated by heat exchange in a heat pump to heat the battery, so that the thermal management system of the vehicle has the advantages of high energy utilization rate and high heating efficiency.

According to another specific implementation of the present invention, the present invention discloses a thermal management system of a vehicle, wherein the electric drive circulation loop includes an electric drive cooling liquid flow path and a radiating flow path, the electric drive cooling liquid flow path includes an electric drive assembly and a second water pump which are connected in a serial manner, and the radiating flow path includes a radiator.

The electric drive circulation loop further includes a third flow path switching component, and the third flow path switching component is arranged between the electric drive cooling liquid flow path and the radiating flow path, so as to selectively communicate the electric drive cooling liquid flow path independently and bypass the radiating flow path, or arrange the electric drive cooling liquid flow path and the radiating flow path in a serial manner. A first end of the electric drive cooling liquid flow path forms the first end of the electric drive circulation loop, and a second end of the electric drive cooling liquid flow path forms the second end of the electric drive circulation loop.

By adopting the above technical solution, when the excess heat of the electric drive assembly is sufficient to supply heat to the refrigerant circulation system, the electric drive cooling liquid flow path is communicated independently and the radiating flow path is bypassed, and the electric drive cooling liquid flows through the electric drive cooling liquid channel of the first heat exchanger and exchanges heat with the refrigerant in the refrigerant channel of the first heat exchanger, and is transmitted into the refrigerant circulation system to recover the excess heat of the electric drive assembly, thereby improving the energy utilization rate of the thermal management system. When the excess heat of the electric drive assembly is insufficient to supply heat to the refrigerant circulation system, the electric drive cooling liquid flow path and the radiating flow path are arranged in the serial manner, so that the electric drive circulation loop transmits the heat absorbed from the external environment through a low-temperature radiator and the excess heat of the electric drive assembly into the electric drive cooling liquid of the first heat exchanger, and exchanges heat with the refrigerant in the refrigerant channel of the first heat exchanger, and the heat is transmitted into the refrigerant circulation system, so as to meet the heat supply requirement of the refrigerant circulation system. Furthermore, the low-temperature radiator in the radiating flow path can also absorb the heat in the electric drive cooling liquid of the first heat exchanger, and the heat in the refrigerant circulation system is transferred into the external environment through the heat exchange between the refrigerant of the first heat exchanger and the electric drive cooling liquid. Therefore, the electric drive circulation loop of the thermal management system of the vehicle only needs to be provided with the third flow path switching component to enable the electric drive circulation loop to exchange heat with the refrigerant circulation system according to the heat requirement of the refrigerant circulation system, so that the overall structure of the electric drive circulation loop is simpler.

According to another specific implementation of the present invention, the present invention discloses a thermal management system of a vehicle, wherein the electric drive circulation loop further includes a hot core flow path, and the hot core flow path includes a hot core. The hot core is arranged between the electric drive assembly and the third flow path switching component, so that the third flow path switching component can also selectively arrange the electric drive cooling liquid flow path and the hot core flow path in a serial manner.

By adopting the above technical solution, when the electric drive cooling liquid flow path and the hot core flow path are arranged in the serial manner, the hot core can absorb the electric drive excess heat and the heat of the electric drive cooling liquid of the first heat exchanger, and release the heat into the passenger compartment, so as to raise the temperature of the passenger compartment, thereby achieving a dehumidification function of the passenger compartment. Moreover, since the hot core flow path and the radiating flow path are arranged in parallel, by adjusting the third flow path switching component, the proportion of the electric drive cooling liquid flowing into the radiating flow path and the hot core flow path can be adjusted according to actual needs, and then, the electric drive excess heat and the heat of the electric drive cooling liquid of the first heat exchanger are proportionally distributed to the hot core and the radiator, so as to adjust the heat released into the passenger compartment by the hot core by controlling the heat of the electric drive cooling liquid absorbed by the hot core, thereby adjusting the dehumidification capability of the passenger compartment.

According to another specific implementation of the present invention, the present invention discloses a thermal management system of a vehicle, wherein the battery circulation loop includes a battery and a third water pump which are connected in a serial manner. A second end of the third water pump is connected with the first end of the battery cooling liquid channel of the third heat exchanger, the second end of the battery cooling liquid channel of the third heat exchanger is connected with a first end of a cooling liquid channel of the battery, and a second end of the cooling liquid channel of the battery is connected with a first end of the third water pump through the second flow path switching component, so as to selectively communicate the second end of the cooling liquid channel of the battery with the first end of the third water pump, so that the electric drive circulation loop and the battery circulation loop are arranged in a mutually independent manner, or a second end of the cooling liquid channel of the battery communicates with a first end of the second water pump through the second flow path switching component, so as to selectively communicate the second end of the cooling liquid channel of the battery with the first end of the second water pump, so that the electric drive circulation loop and the battery circulation loop are arranged in a serial manner.

By adopting the above technical solution, when the electric drive circulation loop and the battery circulation loop are arranged in the mutually independent manner, the battery circulation loop only exchanges heat with the third heat exchanger, that is, the third heat exchanger can cool or heat the battery. When the electric drive circulation loop and the battery circulation loop are arranged in the serial manner, part of the heat in the third heat exchanger of the battery circulation loop can be transmitted into the second water pump through the battery circulation loop and the electric drive circulation loop, so as to avoid the problem of frosting and shutdown of the second water pump in extreme low-temperature weather. Furthermore, the serial connection between the electric drive circulation loop and the battery circulation loop can also enable the battery to release heat to the external environment through the radiator, thereby reducing the cooling requirement in the refrigerant circulation system while ensuring the cooling efficiency of the battery.

According to another specific implementation of the present invention, the present invention discloses a thermal management system of a vehicle, wherein the second flow path switching component is configured as a second four-way valve. The second four-way valve has a first opening, a second opening, a third opening and a fourth opening, the first opening is connected with the third flow path switching component, the second opening is connected with the first end of the second water pump, the third opening is connected with the second end of the cooling liquid channel of the battery, and the fourth opening is connected with the first end of the third water pump.

When the first opening of the second four-way valve communicates with the second opening and the third opening communicates with the fourth opening, the electric drive circulation loop and the battery circulation loop are arranged in the mutually independent manner.

When the first opening of the second four-way valve communicates with the fourth opening and the third opening communicates with the second opening, the electric drive circulation loop and the battery circulation loop are arranged in the serial manner.

By adopting the above technical solution, the second flow path switching component is configured as the second four-way valve cooperated with the first four-way valve, so that in the thermal management system of vehicle, only simple valve body arrangement is needed to unify a battery thermal management system with a passenger compartment thermal management system. That is, the cooling and heating of the passenger compartment and battery can be completed by simply switching valve body flow paths, so that the overall loop of the thermal management system is simpler.

According to another specific implementation of the present invention, the present invention discloses a thermal management system of a vehicle, wherein the third flow path switching component is configures as a four-way proportional valve. The four-way proportional valve has a first connecting opening, a second connecting opening, a third connecting opening and a fourth connecting opening, the first connecting opening is connected with a second end of the radiator, the second connecting opening is connected with a second end of the hot core, the third connecting opening is connected with a second end of the electric drive assembly, and the fourth connecting opening is connected with the first opening of the second four-way valve. A first end of the electric drive assembly is connected with the first end of the electric drive cooling liquid channel of the first heat exchanger, a first end of the radiator is connected with the second end of the electric drive assembly, and a first end of the hot core is connected with the second end of the electric drive assembly.

When the first connecting opening of the four-way proportional valve communicates with the fourth connecting opening, the electric drive cooling liquid flow path and the radiating flow path are arranged in the serial manner.

When the first connecting opening and the second connecting opening of the four-way proportional valve proportionally communicate with the fourth connecting opening, the electric drive cooling liquid flow path is respectively arranged proportionally with the radiating flow path and the hot core flow path the a serial manner.

When the third connecting opening of the four-way proportional valve communicates with the fourth connecting opening, the electric drive cooling liquid flow path is independently communicated and the radiating flow path and the hot core flow path are bypassed.

When the first connecting opening and the third connecting opening of the four-way proportional valve proportionally communicate with the fourth connecting opening, a part of the electric drive cooling liquid flow path is proportionally and independently communicated and the radiating flow path and the hot core flow path are bypassed, and the other part of the electric drive cooling liquid flow path and the radiating flow path are arranged in a serial manner.

By adopting the above technical solution, the third flow path switching component is configures as the four-way proportional valve, so that the thermal management system of vehicle only requires simple valve body arrangement to distribute heat exchange of the first heat exchanger and the third heat exchanger with the low-temperature radiator, the electric drive assembly and the hot core according to the heat requirement. Therefore, the electric drive circulation loop has a simpler overall structure and stronger robustness. Furthermore, the flow rate of the electric drive cooling liquid flowing through the radiator, the hot core and the third connecting opening of the four-way proportional valve can also be controlled by adjusting the opening sizes of different connecting openings of the four-way proportional valve, so as to control the heat transfer of the first heat exchanger and the third heat exchanger with the low-temperature radiator, the electric drive assembly and the hot core. **In** this way, the heat distribution in the electric drive circulation loop and the battery circulation loop can be achieved through simple valve body arrangement, so that the thermal management system of the vehicle has a simpler overall structure.

According to another specific implementation of the present invention, the present invention discloses a thermal management system of a vehicle, wherein the electric drive assembly includes a charging unit and an electric drive member, a first end of the charging unit is connected with the first end of the electric drive cooling liquid channel of the first heat exchanger, a second end of the charging unit is connected with a first end of the electric drive member, and a second end of the electric drive member is respectively connected with the third connecting opening of the four-way proportional valve, the first end of the radiator and the first end of the hot core.

By adopting the above technical solution, both the charging unit and the electric drive member can generate heat, thereby forming electric drive excess heat.

An implementation of the present invention further provides a vehicle, including any one of the above thermal management systems of the vehicle.

By adopting the above technical solution, in the thermal management system of the vehicle, an environmentally-friendly refrigerant with flammability can exchange heat through two loops connected in parallel to avoid the danger of combustion caused by excessive refrigerant filling and leakage into the passenger compartment. Therefore, the thermal management system of the vehicle has the advantage of being applicable to refrigerants needing secondary loops. Furthermore, the thermal management system of the vehicle can complete the cooling or heating of the passenger compartment and the battery through the heat exchange of the heat exchanger by controlling the flow direction of the refrigerant, without the need to additionally provide components such as electric heaters on the sides of the passenger compartment and the battery, thereby greatly reducing the number of parts in the thermal management system of the vehicle, and greatly reducing the complexity of the loop. **In** addition, the thermal management system of the vehicle generates heat through a self-circulation process of the refrigerant, without the need for high-speed rotating components such as motors to generate heat, so the reliability of the refrigerant circulation system is higher. Furthermore, the heating efficiency is also higher than the heating efficiency of motor stalling. Moreover, the distribution of the heat and cold energy in the cooling liquid circulation system of the thermal management system of the vehicle is achieved by controlling a simple valve body, so that the thermal management system of the vehicle also has the advantage of simple overall structure.

The present invention has the following beneficial effects:
**In** the refrigerant circulation system of the thermal management system of the vehicle provided by the present invention, a refrigerant can respectively flow through a loop of the first expansion valve and the second heat exchanger and a loop of the second expansion valve and the third heat exchanger, which are connected in parallel, so that an environmentally-friendly refrigerant with flammability, such as an R290 refrigerant, can exchange heat through the two loops connected in parallel to avoid the danger of combustion caused by excessive refrigerant filling and leakage into the passenger compartment. Therefore, the thermal management system of the vehicle has the advantage of being applicable to refrigerants needing secondary loops.

Moreover, the refrigerant circulation system can exchange heat with the passenger compartment cooling liquid circulation system, the electric drive circulation loop and the battery circulation loop through the first heat exchanger, the second heat exchanger and the third heat exchanger. When the temperature of the external environment is relatively high, the first heat exchanger is used as a condenser to release heat, and both the second heat exchanger and the third heat exchanger are used as evaporators to absorb heat. The first water pump can convey the passenger compartment cooling liquid subjected to heat exchange and cooling by the second heat exchanger to the cold-hot core (used as a cold core at this time) of the passenger compartment, so as to cool the passenger compartment. The third water pump conveys the battery cooling liquid subjected to heat exchange and cooling by the third heat exchanger into the battery circulation loop to cool the battery, thereby avoiding the impact of a high temperature on the performance of the battery. The second water pump conveys the electric drive cooling liquid subjected to heat exchange and heating by the first heat exchanger into the electric drive circulation loop, and the heat is transferred into the external environment through the electric drive circulation loop. When the temperature of the external environment is relatively low, the first heat exchanger is used as an evaporator to absorb heat, and both the second heat exchanger and the third heat exchanger are used as condensers to release heat. The first water pump can convey the passenger compartment cooling liquid subjected to heat exchange and heating by the second heat exchanger into the cold-hot core (used as a hot core at this time) of the passenger compartment, so as to supply the heat to the passenger compartment. The third water pump conveys the battery cooling liquid subjected to heat exchange and heating by the third heat exchanger into the battery circulation loop to heat the battery, thereby avoiding the impact of a low temperature on the performance of the battery. The second water pump conveys the electric drive cooling liquid subjected to heat exchange and cooling by the first heat exchanger into the electric drive circulation loop to absorb electric drive excess heat and environmental heat, so as to fully utilize the energy in the thermal management system, thereby improving the energy utilization rate in the thermal management system. Therefore, the thermal management system of the vehicle can complete the cooling or heating of the passenger compartment and battery through the heat exchange of the heat exchanger by controlling the flow direction of the refrigerant, without the need to additionally provide components such as electric heaters on the sides of the passenger compartment and the battery, thereby greatly reducing the number of parts in the thermal management system of the vehicle, and greatly reducing the complexity of the loop.

In addition, the thermal management system generates heat through a self-circulation process of the refrigerant, without the need for high-speed rotating components such as motors to generate heat, so the reliability of the refrigerant circulation system is higher. Furthermore, the heating efficiency is also higher than the heating efficiency of motor stalling. Moreover, the distribution of the heat and cold energy in the cooling liquid circulation system of the thermal management system of the vehicle is achieved by controlling a simple valve body, so that the thermal management system of the vehicle also has the advantage of simple overall structure.

Other features and corresponding beneficial effects of the present invention are described and illustrated in the later part of the specification. Moreover, it should be understood that at least some of the beneficial effects become apparent from the description in the specification of the present invention.

### Brief Description of the Drawings

Fig. 1 is a systematic schematic diagram of a thermal management system of a vehicle provided in Embodiment 1 of the present invention in a first working mode;
Fig. 2 is a systematic schematic diagram of the thermal management system of the vehicle provided in Embodiment 1 of the present invention in a second working mode;
Fig. 3 is a systematic schematic diagram of the thermal management system of the vehicle provided in Embodiment 1 of the present invention in a third working mode;
Fig. 4 is a systematic schematic diagram of the thermal management system of the vehicle provided in Embodiment 1 of the present invention in a fourth working mode;
Fig. 5 is a systematic schematic diagram of the thermal management system of the vehicle provided in Embodiment 1 of the present invention in a fifth working mode;
Fig. 6 is a systematic schematic diagram of the thermal management system of the vehicle provided in Embodiment 1 of the present invention in a sixth working mode;
Fig. 7 is a systematic schematic diagram of the thermal management system of the vehicle provided in Embodiment 1 of the present invention in a seventh working mode;
Fig. 8 is a systematic schematic diagram of the thermal management system of the vehicle provided in Embodiment 1 of the present invention in an eighth working mode;
Fig. 9 is a systematic schematic diagram of the thermal management system of the vehicle provided in Embodiment 1 of the present invention in a ninth working mode;
Fig. 10 is a systematic schematic diagram of the thermal management system of the vehicle provided in Embodiment 1 of the present invention in a tenth working mode;
Fig. 11 is a systematic schematic diagram of the thermal management system of the vehicle provided in Embodiment 1 of the present invention in an eleventh working mode;
Fig. 12 is a systematic schematic diagram of the thermal management system of the vehicle provided in Embodiment 1 of the present invention in a twelfth working mode;
Fig. 13 is a systematic schematic diagram of the thermal management system of the vehicle provided in Embodiment 1 of the present invention in a thirteenth working mode;
Fig. 14 is a systematic schematic diagram of the thermal management system of the vehicle provided in Embodiment 1 of the present invention in a fourteenth working mode;
Fig. 15 is a systematic schematic diagram of the thermal management system of the vehicle provided in Embodiment 1 of the present invention in a fifteenth working mode;
Fig. 16 is a systematic schematic diagram of the thermal management system of the vehicle provided in Embodiment 1 of the present invention in a sixteenth working mode; and
Fig. 17 is a systematic schematic diagram of the thermal management system of the vehicle provided in Embodiment 1 of the present invention in a seventeenth working mode.

### Description of Reference Numerals:

10: refrigerant circulation system;
110: compressor;
120: first heat exchanger;
130: first expansion valve;
140: second heat exchanger;
150: third heat exchanger;
160: second expansion valve;
170: first four-way valve; 1a: first interface; 2a: second interface; 3a: third interface; 4a: fourth interface;
20: passenger compartment cooling liquid circulation system; 210: first water pump; 220: cold-hot core;
30: engine room cooling liquid circulation system;
310: electric drive circulation loop;
311: electric drive cooling liquid flow path; 3111: electric drive assembly; 3111a: charging unit; 3111b: electric drive member; 3112: second water pump;
312: radiating flow path; 3121: radiator;
313: hot core flow path; 3131: hot core;
314: four-way proportional valve; 1b: first connecting opening; 2b: second connecting opening; 3b: third connecting opening; 4b: fourth connecting opening;
320: battery circulation loop;
321: battery;
322: third water pump;
330: second four-way valve; 1c: first opening; 2c: second opening; 3c: third opening; 4c: fourth opening.

### Detailed Description of the Embodiments

The implementations of the present invention are described below with specific embodiments. Those skilled in the art can easily understand other advantages and effects of the present invention according to the contents disclosed by the specification. Although the description of the present invention will be introduced in conjunction with preferred embodiments, this does not mean that the features of the present invention are only limited to the implementations. On the contrary, the purpose of introducing the present invention in conjunction with the implementations is to cover other options or modifications that may be extended based on the claims of the present invention. In order to provide a deep understanding of the present invention, the following description will include many specific details. The present invention may also be implemented without using these details. In addition, in order to avoid confusion or ambiguity of the focus of the present invention, some specific details will be omitted in the description. It should be noted that in the case of no conflict, the embodiments in the present invention and the features in the embodiments may be combined with each other.

It should be noted that in the specification, similar reference numbers and letters represent similar items in the following accompanying drawings. Therefore, once a certain item is defined in one accompanying drawing, it does not need to be further defined and explained in subsequent accompanying drawings.

In the description of this embodiment, it should be noted that the orientation or position relationships indicated by terms "upper", "lower", "inside", "bottom" and the like are based on orientation or position relationships shown in accompanying drawings, or orientation or position relationships of products of the present invention that are commonly placed during use. The terms are only for the convenience of describing the present invention and simplifying the description, but do not indicate or imply that the specified apparatus or element needs to have a specific orientation or needs to be constructed and operated in a specific orientation, so that the terms cannot be understood as a limitation to the present invention.

The terms "first", "second" and the like are only used to distinguish descriptions, but cannot be understood as indicating or implying the relative importance.

In the description of this embodiment, it should also be noted that unless otherwise expressly specified and limited, the terms "arranged", "connected" and "connection" should be understood in a broad sense. For example, the connection may be a fixed connection, a detachable connection or an integrated connection, may be a mechanical connection or an electrical connection, or may be a direct connection, an indirect connection through an intermediate medium or an internal communication between two elements. For those of ordinary skill in the art, the specific meanings of the above terms in this embodiment can be understood according to specific situations.

In order to make the objectives, technical solutions and advantages of the present invention more clear, the implementations of the present invention will be further described in detail below with reference to the accompanying drawings.

### Embodiment 1

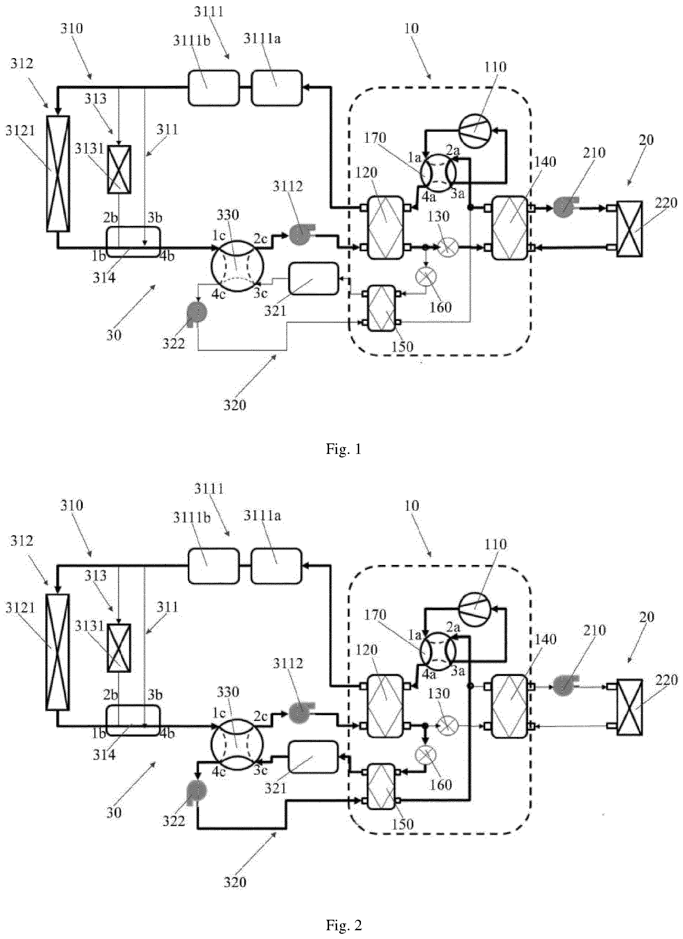

This embodiment provides a thermal management system of a vehicle, as shown in Fig. 1 to Fig.17, including: a refrigerant circulation system 10 and a cooling liquid circulation system.

The refrigerant circulation system 10 includes a compressor 110, a first heat exchanger 120, a first expansion valve 130, a second heat exchanger 140, a third heat exchanger 150, a second expansion valve 160 and a first flow path switching component.

The first heat exchanger 120 has a refrigerant channel and an electric drive cooling liquid channel which are independent of each other and capable of transferring heat. The second heat exchanger 140 has a refrigerant channel and a passenger compartment cooling liquid channel which are independent of each other and capable of transferring heat. The third heat exchanger 150 has a refrigerant channel and a battery cooling liquid channel which are independent of each other and capable of transferring heat. A first end of the refrigerant channel of the first heat exchanger 120 is respectively connected with a first end of the first expansion valve 130 and a first end of the second expansion valve 160. A second end of the first expansion valve 130 is connected with a first end of the refrigerant channel of the second heat exchanger 140, a second end of the second expansion valve 160 is connected with a first end of the refrigerant channel of the third heat exchanger 150, and the first expansion valve 130 and the second expansion valve 160 are arranged in a parallel manner.

The first flow path switching component is arranged among the compressor 110, a second end of the refrigerant channel of the first heat exchanger 120, a second end of the refrigerant channel of the second heat exchanger 140 and a second end of the refrigerant channel of the third heat exchanger 150, so as to selectively communicate the second end of the refrigerant channel of the second heat exchanger 140, a first end of the compressor 110, a second end of the compressor 110 and the second end of the refrigerant channel of the first heat exchanger 120 in sequence, and communicate the second end of the refrigerant channel of the third heat exchanger 150, the first end of the compressor 110, the second end of the compressor 110 and the second end of the refrigerant channel of the first heat exchanger 120 in sequence, so that the first heat exchanger 120 can be used as a condenser, and both the second heat exchanger 140 and the third heat exchanger 150 can be used as evaporators;
or communicate the second end of the refrigerant channel of the first heat exchanger 120, a first end of the compressor 110, a second end of the compressor 110 and the second end of the refrigerant channel of the second heat exchanger 140 in sequence, and communicate the second end of the refrigerant channel of the first heat exchanger 120, the first end of the compressor 110, the second end of the compressor 110 and the second end of the refrigerant channel of the third heat exchanger 150 in sequence, so that the first heat exchanger 120 can be used as an evaporator, and both the second heat exchanger 140 and the third heat exchanger 150 can be used as condensers.

In addition, the cooling liquid circulation system includes: a passenger compartment cooling liquid circulation system 20 and an engine room cooling liquid circulation system 30, and the passenger compartment cooling liquid channel of the second heat exchanger 140 is connected with the passenger compartment cooling liquid circulation system 20. Specifically, the passenger compartment cooling liquid circulation system 20 can include a radiator, and the passenger compartment cooling liquid channel of the second heat exchanger 140 communicates with the radiator. The radiator can dissipate the heat in the passenger compartment cooling liquid of the second heat exchanger 140 to achieve the heating effect of the passenger compartment; or the passenger compartment cooling liquid of the second heat exchanger 140 absorbs the heat in the passenger compartment through the radiator to achieve the cooling effect of the passenger compartment. The passenger compartment cooling liquid circulation system 20 can also include a first water pump 210 and a cold-hot core 220. An output end of the first water pump 210 communicates with an input end of the cold-hot core 220, an output end of the cold-hot core 220 communicates with an input end of the passenger compartment cooling liquid channel of the second heat exchanger 140, and an output end of the passenger compartment cooling liquid channel of the second heat exchanger 140 communicates with an input end of the first water pump 210. The first water pump 210 can pump the passenger compartment cooling liquid of the second heat exchanger 140 into the cold-hot core 220. Moreover, when the cold-hot core 220 is used as a cold core, the passenger compartment cooling liquid can absorb the heat of the passenger compartment, thereby achieving the cooling effect of the passenger compartment; and when the cold-hot core 220 is used as a hot core, the heat of the passenger compartment cooling liquid can be released into the passenger compartment, thereby achieving the heating effect of the passenger compartment. The first water pump 210 can drive the passenger compartment cooling liquid of the second heat exchanger 140 to flow into the cold-hot core 220, so as to increase the flow velocity of the passenger compartment cooling liquid, thereby improving the heat exchange efficiency of the passenger compartment. The cold-hot core 220 can absorb more heat from the passenger compartment or release more heat into the passenger compartment, thereby improving the heat exchange effect of the passenger compartment. Therefore, the passenger compartment cooling liquid circulation system 20 in this embodiment preferably includes a first water pump 210 and a cold-hot core 220.

The engine room cooling liquid circulation system 30 includes an electric drive circulation loop 310, a battery circulation loop 320 and a second flow path switching component. A first end of the electric drive circulation loop 310 is connected with a first end of the electric drive cooling liquid channel of the first heat exchanger 120, and a second end of the electric drive circulation loop 310 is connected with a second end of the electric drive cooling liquid channel of the first heat exchanger 120. A first end of the battery circulation loop 320 is connected with a first end of the battery cooling liquid channel of the third heat exchanger 150, and a second end of the battery circulation loop 320 is connected with a second end of the battery cooling liquid channel of the third heat exchanger 150.

Specifically, various components in the refrigerant circulation system 10 and the cooling liquid circulation system are communicated through pipelines, and the inlets and outlets of various pipelines and various components are connected through pipe joints.

More specifically, the first heat exchanger 120, the second heat exchanger 140 and the third heat exchanger 150 are all two-way heat exchangers, so that by adjusting the flow direction of the refrigerant, the first heat exchanger 120 is used as a condenser, and the second heat exchanger 140 and the third heat exchanger 150 are used as evaporators; or the first heat exchanger 120 is used as an evaporator, and the second heat exchanger 140 and the third heat exchanger 150 are used as condensers. Furthermore, the first heat exchanger 120, the second heat exchanger 140 and the third heat exchanger 150 can be respectively configured as plate heat exchangers, tubular heat exchangers or other types of heat exchangers.

More specifically, the first flow path switching component can be an electromagnetic directional valve, a ball valve or other structures provided with at least four openings, so as to adjust the flow direction of the refrigerant by switching different ways.

It should be noted that in the refrigerant circulation system 10, a refrigerant can respectively flow through a loop of the first expansion valve 130 and the second heat exchanger 140 and a loop of the second expansion valve 160 and the third heat exchanger 150, which are connected in parallel, so that an environmentally-friendly refrigerant with flammability, such as an R290 refrigerant, can exchange heat through the two loops connected in parallel to avoid the danger of combustion caused by excessive refrigerant filling and leakage into the passenger compartment. Therefore, the thermal management system of the vehicle has the advantage of being applicable to refrigerants needing secondary loops.

Moreover, the refrigerant circulation system 10 can exchange heat with the passenger compartment cooling liquid circulation system 20, the electric drive circulation loop 310 and the battery circulation loop 320 through the first heat exchanger 120, the second heat exchanger 140 and the third heat exchanger 150. When the temperature of the external environment is relatively high, the first heat exchanger 120 is used as a condenser to release heat, and both the second heat exchanger 140 and the third heat exchanger 150 are used as evaporators to absorb heat. The first water pump 210 can convey the passenger compartment cooling liquid subjected to heat exchange and cooling by the second heat exchanger 140 to the cold-hot core 220 (used as a cold core at this time) of the passenger compartment, so as to cool the passenger compartment. The battery cooling liquid subjected to heat exchange and cooling by the third heat exchanger 150 can be conveyed into the battery circulation loop 320 to cool the battery 321, thereby avoiding the impact of a high temperature on the performance of the battery 321. The electric drive cooling liquid subjected to heat exchange and heating by the first heat exchanger 120 can be conveyed into the electric drive circulation loop 310, and the heat is transferred into the external environment through the electric drive circulation loop 310. When the temperature of the external environment is relatively low, the first heat exchanger 120 is used as an evaporator to absorb heat, and both the second heat exchanger 140 and the third heat exchanger 150 are used as condensers to release heat. The first water pump 210 can convey the passenger compartment cooling liquid subjected to heat exchange and heating by the second heat exchanger 140 into the cold-hot core 220 (used as a hot core at this time) of the passenger compartment, so as to supply the heat to the passenger compartment. The battery cooling liquid subjected to heat exchange and heating by the third heat exchanger 150 can be conveyed into the battery circulation loop 320 to heat the battery 321, thereby avoiding the impact of a low temperature on the performance of the battery 321. The electric drive cooling liquid subjected to heat exchange and cooling by the first heat exchanger 120 can be conveyed into the electric drive circulation loop 310 to absorb electric drive excess heat and environmental heat, so as to fully utilize the energy in the thermal management system, thereby improving the energy utilization rate in the thermal management system. Therefore, the thermal management system of the vehicle can complete the cooling or heating of the passenger compartment and battery 321 through the heat exchange of the heat exchanger by controlling the flow direction of the refrigerant, without the need to additionally provide components such as electric heaters on the sides of the passenger compartment and the battery 321, thereby greatly reducing the number of parts in the thermal management system of the vehicle, and greatly reducing the complexity of the loop.

In addition, the thermal management system generates heat through a self-circulation process of the refrigerant, without the need for high-speed rotating components such as motors to generate heat, so the reliability of the refrigerant circulation system 10 is higher. Furthermore, the heating efficiency is also higher than the heating efficiency of motor stalling.

In the thermal management system of the vehicle shown in Fig. 1 to Fig. 17, optionally, the engine room cooling liquid circulation system 30 further includes a second flow path switching component. The second flow path switching component is arranged between the electric drive circulation loop 310 and the battery circulation loop 320, so as to selectively arrange the electric drive circulation loop 310 and the battery circulation loop 320 in a mutually independent manner, or arrange the electric drive circulation loop 310 and the battery circulation loop 320 in a serial manner. Furthermore, the second flow path switching component can be an electromagnetic directional valve, a ball valve or other structures provided with at least four openings, so as to arrange the electric drive circulation loop 310 and the battery circulation loop 320 in the mutually independent manner, or arrange the electric drive circulation loop 310 and the battery circulation loop 320 in the serial manner by switching different ways.

Specifically, when the electric drive circulation loop 310 and the battery circulation loop 320 are arranged in the mutually independent manner, through the heat exchange between the electric drive cooling liquid of the first heat exchanger 120 and the refrigerant, the refrigerant circulation system 10 can exchange heat with the electric drive circulation loop 310. Through the heat exchange between the battery cooling liquid of the third heat exchanger 150 and the refrigerant, the refrigerant circulation system 10 can exchange heat with the battery circulation loop 320. When the electric drive circulation loop 310 and the battery circulation loop 320 are arranged in the serial manner, the first heat exchanger 120 and the third heat exchanger 150 are connected in series, and the cooling liquid can flow from the third heat exchanger 150 to the first heat exchanger 120, so that in extreme cold weather, the heat released by using the third heat exchanger 150 as a condenser is transferred to the first heat exchanger 120, and the heat is transmitted into the refrigerant circulation system 10 through the heat exchange between the cooling liquid in the first heat exchanger 120 and the refrigerant, so as to maintain the self-circulation operation of the refrigerant circulation system 10 at a low temperature. Furthermore, since the refrigerant channel in the first heat exchanger 120 communicates with the refrigerant channel in the second heat exchanger 140, the refrigerant in the first heat exchanger 120 can also flow through the refrigerant channel in the second heat exchanger 140; and through the heat exchange between the passenger compartment cooling liquid in the second heat exchanger 140 and the refrigerant, the excess heat in the refrigerant circulation system 10 is transmitted into the passenger compartment cooling liquid circulation system 20 and released into the passenger compartment to generate heat, so as to omit an air-assisted electric heater or a high-pressure water heater on a cooling liquid side in a passenger compartment in a traditional thermal management system, thereby greatly reducing the number of parts in the thermal management system of the vehicle, and greatly reducing the complexity of the loop. Moreover, when the electric drive circulation loop 310 and the battery circulation loop 320 are connected in series, the battery 321 can be heated by the electric drive excess heat, and the heat of the battery 321 can also be released into the external environment through the electric drive circulation loop 310.

In the thermal management system of the vehicle shown in Fig. 1 to Fig. 17, optionally, the first flow path switching component is configured as a first four-way valve 170. The first four-way valve 170 has a first interface 1a, a second interface 2a, a third interface 3a and a fourth interface 4a, the first interface 1a is connected with the second end of the compressor 110, the second interface 2a is respectively connected with the second end of the refrigerant channel of the second heat exchanger 140 and the second end of the refrigerant channel of the third heat exchanger 150, the third interface 3a is connected with the first end of the compressor 110, and the fourth interface 4a is connected with the second end of the refrigerant channel of the first heat exchanger 120.

When the first interface 1a of the first four-way valve 170 communicates with the fourth interface 4a and the second interface 2a communicates with the third interface 3a, the second end of the refrigerant channel of the second heat exchanger 140, the second interface 2a of the first four-way valve 170, the third interface 3a, the first end of the compressor 110, the second end of the compressor 110, the first interface 1a of the first four-way valve 170, the fourth interface 4a, the second end of the refrigerant channel of the first heat exchanger 120, the first end of the refrigerant channel of the first heat exchanger 120, the first expansion valve 130 and the first end of the refrigerant channel of the second heat exchanger 140 can communicate in sequence to form a first refrigerant circulation loop; and the second end of the refrigerant channel of the third heat exchanger 150, the second interface 2a of the first four-way valve 170, the third interface 3a, the first end of the compressor 110, the second end of the compressor 110, the first interface 1a of the first four-way valve 170, the fourth interface 4a, the second end of the refrigerant channel of the first heat exchanger 120, the first end of the refrigerant channel of the first heat exchanger 120, the second expansion valve 160 and the first end of the refrigerant channel of the third heat exchanger 150 can communicate in sequence to form a second refrigerant circulation loop.

When the first interface 1a of the first four-way valve 170 communicates with the second interface 2a and the third interface 3a communicates with the fourth interface 4a, the second end of the refrigerant channel of the first heat exchanger 120, the fourth interface 4a of the first four-way valve 170, the third interface 3a, the first end of the compressor 110, the second end of the compressor 110, the first interface 1a of the first four-way valve 170, the second interface 2a, the second end of the refrigerant channel of the second heat exchanger 140, the first end of the refrigerant channel of the second heat exchanger 140, the first expansion valve 130 and the first end of the refrigerant channel of the first heat exchanger 120 can communicate in sequence to form a third refrigerant circulation loop; and the second end of the refrigerant channel of the first heat exchanger 120, the fourth interface 4a of the first four-way valve 170, the third interface 3a, the first end of the compressor 110, the second end of the compressor 110, the first interface 1a of the first four-way valve 170, the second interface 2a, the second end of the refrigerant channel of the third heat exchanger 150, the first end of the refrigerant channel of the third heat exchanger 150, the second expansion valve 160 and the first end of the refrigerant channel of the first heat exchanger 120 can communicate in sequence to form a fourth refrigerant circulation loop.

Specifically, when the first interface 1a of the first four-way valve 170 communicates with the fourth interface 4a and the second interface 2a communicates with the third interface 3a, the high-temperature and high-pressure gaseous refrigerant flowing out of the compressor 110 flows into the refrigerant channel in the first heat exchanger 120 through the first interface 1a and the fourth interface 4a in the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, then after passing through the first expansion valve 130, part of the refrigerant becomes a low-temperature and low-pressure liquid refrigerant and flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. After passing through the second expansion valve 160, the other part of the refrigerant becomes a low-temperature and low-pressure liquid refrigerant and flows into the refrigerant channel in the third heat exchanger 150, and the heat of the battery cooling liquid in the third heat exchanger 150 is absorbed, so that the third heat exchanger 150 is used as an evaporator to absorb the heat of the battery 321. The refrigerant flowing out of the refrigerant channel in the second heat exchanger 140 and the refrigerant flowing out of the refrigerant channel in the third heat exchanger 150 become high-temperature and low-pressure liquid refrigerants which flow into the compressor 110 through the second interface 2a and the third interface 3a of the first four-way valve 170 and become a high-temperature and high-pressure gaseous refrigerant through the compressor 110, so as to perform the next circulation flow.

When the first interface 1a of the first four-way valve 170 communicates with the second interface 2a and the third interface 3a communicates with the fourth interface 4a, part of the high-temperature and high-pressure gaseous refrigerant flowing out of the compressor 110 flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. The other part of the high-temperature and high-pressure gaseous refrigerant flowing out of the compressor 110 flows into the refrigerant channel in the third heat exchanger 150, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerants flowing out of the first expansion valve 130 and the second expansion valve 160 flow into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat and the heat in the environment through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

Therefore, the thermal management system of the vehicle can convert the flow direction of the refrigerant in the refrigerant circulation system 10 through the direction change of the first four-way valve 170 by arranging the first four-way valve 170 in the refrigerant circulation system 10. Thus, when the temperature of the external environment is relatively high, the first heat exchanger 120 is used as a condenser to release heat, and the second heat exchanger 140 and the third heat exchanger 150 are used as evaporators to absorb heat. When the temperature of the external environment is relatively low, the first heat exchanger 120 is used as an evaporator to absorb heat, and the second heat exchanger 140 and the third heat exchanger 150 are used as condensers to release heat. That is to say, in the refrigerant circulation system 10, the cooling or heating function of the first heat exchanger 120 with the second heat exchanger 140 and the third heat exchanger 150 can be changed only through the direction change of the first four-way valve 170, without the need to additionally provide components such as electric heaters on the sides of the passenger compartment and the battery 321, thereby greatly reducing the number of parts in the thermal management system of the vehicle, and greatly reducing the complexity of the loop. Moreover, the thermal management system of the vehicle can also fully utilize the electric drive excess heat and the cooling liquid heated by heat exchange in a heat pump to heat the battery 321, so that the thermal management system of the vehicle has the advantages of high energy utilization rate and high heating efficiency.

In the thermal management system of the vehicle shown in Fig. 1 to Fig. 17, optionally, the electric drive circulation loop 310 includes an electric drive cooling liquid flow path 311 and a radiating flow path 312. The electric drive cooling liquid flow path 311 includes an electric drive assembly 3111 and a second water pump 3112 which are connected in a serial manner. The radiating flow path 312 includes a radiator 3121.

The electric drive circulation loop 310 further includes a third flow path switching component, and the third flow path switching component is arranged between the electric drive cooling liquid flow path 311 and the radiating flow path 312, so as to selectively communicate the electric drive cooling liquid flow path 311 independently and bypass the radiating flow path 312, or arrange the electric drive cooling liquid flow path 311 and the radiating flow path 312 in a serial manner. A first end of the electric drive cooling liquid flow path 311 forms the first end of the electric drive circulation loop 310, and a second end of the electric drive cooling liquid flow path 311 forms the second end of the electric drive circulation loop 310.

Specifically, the electric drive assembly 3111 can include members such as a charger and a motor, and the electric drive assembly 3111 is arranged in an engine room of a vehicle.

More specifically, on the premise of ensuring that the first end of the electric drive cooling liquid channel of the first heat exchanger 120 communicates with a first end of the electric drive assembly 3111, the distance and position between the electric drive assembly 3111 and the first heat exchanger 120 can be adjusted according to actual design and usage requirements, which is not specifically limited in this embodiment.

It should be noted that when the excess heat of the electric drive assembly 3111 is sufficient to supply heat to the refrigerant circulation system 10, the electric drive cooling liquid flow path 311 is independently communicated and the radiating flow path 312 is bypassed, and the electric drive cooling liquid flows through the electric drive cooling liquid channel of the first heat exchanger 120 and exchanges heat with the refrigerant in the refrigerant channel of the first heat exchanger 120, and is transmitted into the refrigerant circulation system 10 to recover the excess heat of the electric drive assembly 3111, thereby improving the energy utilization rate of the thermal management system. When the excess heat of the electric drive assembly 3111 is insufficient to supply heat to the refrigerant circulation system 10, the electric drive cooling liquid flow path 311 and the radiating flow path 312 are arranged in the serial manner, so that the electric drive circulation loop 310 transmits the heat absorbed from the external environment through a low-temperature radiator 3121 and the recovered excess heat of the electric drive assembly 3111 into the electric drive cooling liquid of the first heat exchanger 120, and exchanges heat with the refrigerant in the refrigerant channel of the first heat exchanger 120, and the heat is transmitted into the refrigerant circulation system 10, so as to meet the heat supply requirement of the refrigerant circulation system 10. Furthermore, the low-temperature radiator 3121 in the radiating flow path 312 can also absorb the heat in the electric drive cooling liquid of the first heat exchanger 120, and the heat in the refrigerant circulation system 10 is transferred into the external environment through the heat exchange between the refrigerant of the first heat exchanger 120 and the electric drive cooling liquid. Therefore, the electric drive circulation loop 310 of the thermal management system of the vehicle only needs to be provided with the third flow path switching component to enable the electric drive circulation loop 310 to exchange heat with the refrigerant circulation system 10 according to the heat requirement of the refrigerant circulation system 10, so that the overall structure of the electric drive circulation loop 310 is simpler.

In the thermal management system of the vehicle shown in Fig. 1 to Fig. 17, optionally, the electric drive circulation loop 310 further includes a hot core flow path 313. The hot core flow path 313 includes a hot core 3131. The hot core 3131 is arranged between the electric drive assembly 3111 and the third flow path switching component, so that the third flow path switching component can also selectively arrange the electric drive cooling liquid flow path 311 and the hot core flow path 313 in a serial manner. Moreover, the hot core 3131 is arranged inside an air conditioner cabinet to achieve a dehumidification function of an air conditioner.

Specifically, when the electric drive cooling liquid flow path 311 and the hot core flow path 313 are arranged in the serial manner, the hot core 3131 can absorb the electric drive excess heat and the heat of the electric drive cooling liquid of the first heat exchanger 120, and release the heat into the passenger compartment, so as to raise the temperature of the passenger compartment, thereby achieving a dehumidification function of the passenger compartment. Moreover, since the hot core flow path 313 and the radiating flow path 312 are arranged in parallel, by adjusting the third flow path switching component, the proportion of the electric drive cooling liquid flowing into the radiating flow path 312 and the hot core flow path 313 can be adjusted according to actual needs, and then, the electric drive excess heat and the heat of the electric drive cooling liquid of the first heat exchanger 120 are proportionally distributed to the hot core 3131 and the radiator 3121, so as to adjust the heat released into the passenger compartment by the hot core 3131 by controlling the heat of the electric drive cooling liquid absorbed by the hot core 3131, thereby adjusting the dehumidification capability of the passenger compartment.

More specifically, the third flow path switching component can be an electromagnetic valve, a proportional valve and the other structures provided with at least four openings. Preferably, in order to more accurately distribute the proportion of the electric drive cooling liquid flowing into the radiating flow path 312 and the hot core flow path 313 to control the transfer of heat, the third flow path switching component in this embodiment is a proportional valve provided with at least four openings.

In the thermal management system of the vehicle shown in Fig. 1 to Fig. 17, optionally, the battery circulation loop 320 includes a battery 321 and a third water pump 322 which are connected in a serial manner. A second end of the third water pump 322 is connected with the first end of the battery cooling liquid channel of the third heat exchanger 150, the second end of the battery cooling liquid channel of the third heat exchanger 150 is connected with a first end of a cooling liquid channel of the battery 321, and a second end of the cooling liquid channel of the battery 321 is connected with a first end of the third water pump 322 through the second flow path switching component, so as to selectively communicate the second end of the cooling liquid channel of the battery 321 with the first end of the third water pump 322, so that the electric drive circulation loop 310 and the battery circulation loop 320 are arranged in a mutually independent manner, or a second end of the cooling liquid channel of the battery 321 communicates with a first end of the second water pump 3112 through the second flow path switching component, so as to selectively communicate the second end of the cooling liquid channel of the battery 321 with the first end of the second water pump 3112, so that the electric drive circulation loop 310 and the battery circulation loop 320 are arranged in a serial manner.

Specifically, when the electric drive circulation loop 310 and the battery circulation loop 320 are arranged in the mutually independent manner, the battery circulation loop 320 only exchanges heat with the third heat exchanger 150, that is, the third heat exchanger 150 can cool or heat the battery 321. When the electric drive circulation loop 310 and the battery circulation loop 320 are arranged in the serial manner, part of the heat in the third heat exchanger 150 of the battery circulation loop 320 can be transmitted into the second water pump 3112 through the battery circulation loop 320 and the electric drive circulation loop 310, so as to avoid the problem of frosting and shutdown of the second water pump 3112 in extreme low-temperature weather. Furthermore, the serial connection between the electric drive circulation loop 310 and the battery circulation loop 320 can also enable the battery 321 to release heat to the external environment through the radiator 3121, thereby reducing the cooling requirement in the refrigerant circulation system 10 while ensuring the cooling efficiency of the battery 321.

In the thermal management system of the vehicle shown in Fig. 1 to Fig. 17, optionally, the second flow path switching component is configured as a second four-way valve 330. The second four-way valve 330 has a first opening 1c, a second opening 2c, a third opening 3c and a fourth opening 4c, the first opening 1c is connected with the third flow path switching component, the second opening 2c is connected with the first end of the second water pump 3112, the third opening 3c is connected with the second end of the cooling liquid channel of the battery 321, and the fourth opening 4c is connected with the first end of the third water pump 322.

When the first opening 1c of the second four-way valve 330 communicates with the second opening 2c and the third opening 3c communicates with the fourth opening 4c, the electric drive circulation loop 310 and the battery circulation loop 320 are arranged in the mutually independent manner. At this time, the electric drive cooling liquid flowing out of the first end of the electric drive cooling liquid channel of the first heat exchanger 120 sequentially passes through the electric drive assembly 3111, the radiator 3121, the third flow path switching component, the first opening 1c of the second four-way valve 330, the second opening 2c, the second water pump 3112 and the second end of the electric drive cooling liquid channel of the first heat exchanger 120 to form a first electric drive cooling liquid loop. Alternatively, the electric drive cooling liquid flowing out of the first end of the electric drive cooling liquid channel of the first heat exchanger 120 sequentially passes through the electric drive assembly 3111, the hot core 3131, the third flow path switching component, the first opening 1c of the second four-way valve 330, the second opening 2c, the second water pump 3112 and the second end of the electric drive cooling liquid channel of the first heat exchanger 120 to form a second electric drive cooling liquid loop. Alternatively, the electric drive cooling liquid flowing out of the first end of the electric drive cooling liquid channel of the first heat exchanger 120 sequentially passes through the electric drive assembly 3111, the third flow path switching component, the first opening 1c of the second four-way valve 330, the second opening 2c, the second water pump 3112 and the second end of the electric drive cooling liquid channel of the first heat exchanger 120 to form a third electric drive cooling liquid loop.

The battery cooling liquid flowing out of the first end of the battery cooling liquid channel of the third heat exchanger 150 sequentially passes through the cooling liquid channel of the battery 321, the third opening 3c of the second four-way valve 330, the fourth opening 4c, the third water pump 322 and the second end of the battery cooling liquid channel of the third heat exchanger 150 to form a battery cooling liquid loop.

Therefore, when the electric drive circulation loop 310 and the battery circulation loop 320 are arranged in the mutually independent manner, the electric drive circulation loop 310 only exchanges heat with the first heat exchanger 120, and the first heat exchanger 120 can absorb heat from the electric drive circulation loop 310 or release heat into the electric drive circulation loop 310. The battery circulation loop 320 only exchanges heat with the third heat exchanger 150, and the third heat exchanger 150 can cool or heat the battery 321.

When the first opening 1c of the second four-way valve 330 communicates with the fourth opening 4c and the third opening 3c communicates with the second opening 2c, the electric drive circulation loop 310 and the battery circulation loop 320 are arranged in the serial manner. At this time, the electric drive cooling liquid flowing out of the first end of the electric drive cooling liquid channel of the first heat exchanger 120 sequentially passes through the electric drive assembly 3111, the radiator 3121, the third flow path switching component, the first opening 1c of the second four-way valve 330, the fourth opening 4c, the third water pump 322, the third heat exchanger 150, the cooling liquid channel of the battery 321, the third opening 3c of the second four-way valve 330, the second opening 2c, the second water pump 3112 and the second end of the electric drive cooling liquid channel of the first heat exchanger 120 to form a first cooling liquid loop.

Alternatively, the electric drive cooling liquid flowing out of the first end of the electric drive cooling liquid channel of the first heat exchanger 120 sequentially passes through the electric drive assembly 3111, the hot core 3131, the third flow path switching component, the first opening 1c of the second four-way valve 330, the fourth opening 4c, the third water pump 322, the third heat exchanger 150, the cooling liquid channel of the battery 321, the third opening 3c of the second four-way valve 330, the second opening 2c, the second water pump 3112 and the second end of the electric drive cooling liquid channel of the first heat exchanger 120 to form a second cooling liquid loop.

The electric drive cooling liquid flowing out of the first end of the electric drive cooling liquid channel of the first heat exchanger 120 sequentially passes through the electric drive assembly 3111, the third flow path switching component, the first opening 1c of the second four-way valve 330, the fourth opening 4c, the third water pump 322, the third heat exchanger 150, the cooling liquid channel of the battery 321, the third opening 3c of the second four-way valve 330, the second opening 2c, the second water pump 3112 and the second end of the electric drive cooling liquid channel of the first heat exchanger 120 to form a third cooling liquid loop.

Therefore, when the electric drive circulation loop 310 and the battery circulation loop 320 are arranged in the serial manner, part of the heat in the third heat exchanger 150 of the battery circulation loop 320 can be transmitted into the second water pump 3112 through the battery circulation loop 320 and the electric drive circulation loop 310, so as to avoid the problem of frosting and shutdown of the second water pump 3112 in extreme low-temperature weather. Furthermore, the serial connection between the electric drive circulation loop 310 and the battery circulation loop 320 can also enable the battery 321 to release heat to the external environment through the radiator 3121, thereby reducing the cooling requirement in the refrigerant circulation system 10 while ensuring the cooling efficiency of the battery 321.

It should be noted that the second flow path switching component is configured as the second four-way valve 330 cooperated with the first four-way valve 170, so that in the thermal management system of the vehicle, only simple valve body arrangement is needed to unify a battery thermal management system with a passenger compartment thermal management system. That is, the cooling and heating of the passenger compartment and the battery 321 can be completed by simply switching valve body flow ways, so that the overall loop of the thermal management system is simpler.

In the thermal management system of the vehicle shown in Fig. 1 to Fig. 17, optionally, the third flow path switching component is configured as a four-way proportional valve 314. The four-way proportional valve 314 has a first connecting opening 1b, a second connecting opening 2b, a third connecting opening 3b and a fourth connecting opening 4b, the first connecting opening 1b is connected with a second end of the radiator 3121, the second connecting opening 2b is connected with a second end of the hot core 3131, the third connecting opening 3b is connected with a second end of the electric drive assembly 3111, and the fourth connecting opening 4b is connected with the first opening 1c of the second four-way valve 330. The first end of the electric drive assembly 3111 is connected with the first end of the electric drive cooling liquid channel of the first heat exchanger 120, a first end of the radiator 3121 is connected with the second end of the electric drive assembly 3111, and a first end of the hot core 3131 is connected with the second end of the electric drive assembly 3111.

When the first connecting opening 1b of the four-way proportional valve 314 communicates with the fourth connecting opening 4b, the electric drive cooling liquid flow path 311 and the radiating flow path 312 are arranged in a serial manner. The electric drive cooling liquid flowing out of the first end of the electric drive cooling liquid channel of the first heat exchanger 120 sequentially passes through the electric drive assembly 3111, the radiator 3121 and the first connecting opening 1b of the four-way proportional valve 314 and the fourth connecting opening 4b, and the electric drive circulation loop 310 and the battery circulation loop 320 are mutually independent of each other or connected in series through the second four-way valve 330. At this time, the heat of the electric drive assembly 3111 is insufficient to meet the heat requirement in the cooling liquid circulation system, and it is necessary to connect the electric drive assembly 3111 with the radiator 3121 in series, and obtain the excess heat thereof through the electric drive assembly 3111 as well as obtain the heat from the external environment through the radiator 3121.

When the first connecting opening 1b and the second connecting opening 2b of the four-way proportional valve 314 proportionally communicate with the fourth connecting opening 4b, the electric drive cooling liquid flow path 311 is respectively arranged proportionally with the radiating flow path 312 and the hot core flow path 313 in a serial manner. After the electric drive cooling liquid flowing out of the first end of the electric drive cooling liquid channel of the first heat exchanger 120 passes through the electric drive assembly 3111, part of the electric drive cooling liquid sequentially flows through the radiator 3121, the first connecting opening 1b of the four-way proportional valve 314 and the fourth connecting opening 4b, and the other part of the electric drive cooling liquid sequentially flows through the hot core 3131, the second connecting opening 2b of the four-way proportional valve 314 and the fourth connecting opening 4b; and the electric drive circulation loop 310 and the battery circulation loop 320 are mutually independent of each other or connected in series through the second four-way valve 330. In this process, the hot core 3131 can absorb the electric drive excess heat and the heat of the electric drive cooling liquid of the first heat exchanger 120, and release the heat into the passenger compartment, so as to raise the temperature of the passenger compartment, thereby achieving a dehumidification function of the passenger compartment. Moreover, the proportion of the electric drive cooling liquid flowing into the radiating flow path 312 and the hot core flow path 313 can be adjusted according to actual needs, thereby adjusting the dehumidification capability of the passenger compartment. Furthermore, when the electric drive circulation loop 310 and the battery circulation loop 320 are connected in series, the battery 321 can also absorb heat from the external environment or release heat to the external environment through the radiator 3121.

When the third connecting opening 3b of the four-way proportional valve 314 communicates with the fourth connecting opening 4b, the electric drive cooling liquid flow path 311 is independently communicated with and the radiating flow path 312 and the hot core flow path 313 are bypassed. The electric drive cooling liquid flowing out of the first end of the electric drive cooling liquid channel of the first heat exchanger 120 sequentially passes through the electric drive assembly 3111 and the third connecting opening 3b of the four-way proportional valve 314 and the fourth connecting opening 4b, and the electric drive circulation loop 310 and the battery circulation loop 320 are mutually independent of each other or connected in series through the second four-way valve 330. At this time, the excess heat of the electric drive assembly 3111 is sufficient to meet the heat requirement in the cooling liquid circulation system.

When the first connecting opening 1b and third connecting opening 3b of the four-way proportional valve 314 proportionally communicate with the fourth connecting opening 4b, a part of the electric drive cooling liquid flow path 311 is proportionally and independently communicated and the radiating flow path 312 and the hot core flow path 313 rare bypassed, and the other part of the electric drive cooling liquid flow path 311 and the radiating flow path 312 are arranged in a serial manner. After the electric drive cooling liquid flowing out of the first end of the electric drive cooling liquid channel of the first heat exchanger 120 passes through the electric drive assembly 3111, part of the electric drive cooling liquid sequentially flows through the radiator 3121, the first connecting opening 1b of the four-way proportional valve 314 and the fourth connecting opening 4b, and the other part of the electric drive cooling liquid sequentially flows through the third connecting opening 3b of the four-way proportional valve 314 and the fourth connecting opening 4b; and the electric drive circulation loop 310 and the battery circulation loop 320 are mutually independent of each other or connected in series through the second four-way valve 330. In this process, when the electric drive circulation loop 310 and the battery circulation loop 320 are mutually independent of each other, the first heat exchanger 120 can absorb the electric drive excess heat and absorb heat from the external environment through the radiator 3121 or release heat to the external environment through the radiator 3121. When the electric drive circulation loop 310 and the battery circulation loop 320 are connected in series, the battery 321 absorbs the electric drive excess heat and absorbs heat from the external environment through the radiator 3121 or releases heat to the external environment through the radiator 3121.

It should be noted that the third flow path switching component is configured as the four-way proportional valve 314, so that the thermal management system of the vehicle only requires simple valve body arrangement to distribute heat exchange of the first heat exchanger 120 and the third heat exchanger 150 with the low-temperature radiator 3121, the electric drive assembly 3111 and the hot core 3131 according to the heat requirement. Therefore, the electric drive circulation loop 310 has a simpler overall structure and stronger robustness. Furthermore, the flow rate of the electric drive cooling liquid flowing through the radiator 3121, the hot core 3131 and the third connecting opening 3b of the four-way proportional valve 314 can also be controlled by adjusting the opening sizes of different connecting openings of the four-way proportional valve 314, so as to control the heat transfer of the first heat exchanger 120 and the third heat exchanger 150 with the low-temperature radiator 3121, the electric drive assembly 3111 and the hot core 3131. In this way, the heat distribution in the electric drive circulation loop 310 and the battery circulation loop 320 can be achieved through simple valve body arrangement, so that the thermal management system of the vehicle has a simpler overall structure.

In the thermal management system of the vehicle shown in Fig. 1 to Fig. 17, optionally, the electric drive assembly 3111 includes a charging unit 3111a and an electric drive member 3111b, a first end of the charging unit 3111a is connected with the first end of the electric drive cooling liquid channel of the first heat exchanger 120, a second end of the charging unit 3111a is connected with a first end of the electric drive member 3111b, and a second end of the electric drive member 3111b is respectively connected with the third connecting opening 3b of the four-way proportional valve 314, the first end of the radiator 3121 and the first end of the hot core 3131.

Specifically, both the charging unit 3111a and the electric drive member 3111b can generate heat, thereby forming electric drive excess heat. Moreover, the electric drive member 3111b can be a motor, the charging unit 3111a can be a charger, and the motor and the charger can be arranged integrally or separately.

The thermal management system of the vehicle selectively communicates various loops among the refrigerant circulation system 10, the passenger compartment cooling liquid circulation system 20 and the engine room cooling liquid circulation system 30 by controlling the communication and blocking among different openings of the first four-way valve 170, the second four-way valve 330 and the four-way proportional valve 314, so that the thermal management system of the vehicle is in different working modes (see the details below), as shown in Table 1. Table 1 is a classification table of working modes of the thermal management system of the vehicle.

**Table 1**

| | | | Heat exchanger state | | | | | | Refrigerant side state | | | | Water pump | | | Cooling liquid side valve state | |
|---|---|---|---|---|---|---|---|---|---|---|---|---|---|---|---|---|---|
| M o d e | Envi ron ment | Working mode | Cold-h ot core | First heat exchan ger | Secon d heat excha nger | Third heat exchan ger | Radia tor | Hot core | Compr essor | First four-w ay valve | First exp ansi on valv e | Seco nd expa nsion valve | First wate r pum p | Seco nd water pum p | Thir d wate r pum p | Four-way proportional valve | Sec ond four -wa y valv e |
| 1. 1 | Sum mer | Only passenger compartment cooling | Absorb heat | Releas e heat | Absor b heat | Non-wo rking | Relea se heat | Non-work ing | Worki ng | 1a&4a, 2a&3a | Wor king | Non-work ing | Wor king | Work ing | Non-work ing | 1b&4b | 1c& 2c, 3c& 4c |
| 1. 2 | | Only battery cooling | Non-w orking | Releas e heat | Non-worki ng | Absorb heat | Relea se heat | Non-work ing | Worki ng | 1a&4a, 2a&3a | Non -wo rkin g | Work ing | Non-work ing | Work ing | Wor king | 1b&4b | 1c& 2c, 3c& 4c |
| 1. 3 | | Passenger compartment cooling + battery cooling | Absorb heat | Releas e heat | Absor b heat | Absorb heat | Relea se heat | Non-work ing | Worki ng | 1a&4a, 2a&3a | Wor king | Work ing | Wor king | Work ing | Wor king | 1b&4b | 1c& 2c, 3c& 4c |
| 2. 1 | Spri ng and Autu mn | Passenger compartment dehumidificatio n | Absorb heat | Releas e heat | Absor b heat | Non-wo rking | Relea se heat | Rele ase heat | Worki ng | 1a&4a, 2a&3a | Wor king | Non-work ing | Wor king | Work ing | Non-work ing | 1b&4b, 2b&4b proportional adjustment | 1c& 2c, 3c& 4c |
| 2. 2 | | Passenger compartment dehumidificatio n + battery cooling | Absorb heat | Releas e heat | Absor b heat | Absorb heat | Relea se heat | Rele ase heat | Worki ng | 1a&4a, 2a&3a | Wor king | Work ing | Wor king | Work ing | Wor king | 1b&4b, 2b&4b proportional adjustment | 1c& 2c, 3c& 4c |
| 2. 3 | | Passenger compartment dehumidificatio n + battery heating | Absorb heat | Releas e heat | Absor b heat | Non-wo rking | Relea se heat | Rele ase heat | Worki ng | 1a&4a, 2a&3a | Wor king | Non-work ing | Wor king | Work ing | Wor king | 1b&4b, 2b&4b proportional adjustment | 1c& 4c, 3c& 2c |
| 2. 4 | | Battery being cooled by radiator | Non-w orking | Non-w orking | Non-worki ng | Non-wo rking | Relea se heat | Non-work ing | Non-w orking | Non-w orking | Non -wo rkin g | Non-work ing | Non-work ing | Work ing | Wor king | 1b&4b | 1c& 4c, 3c& 2c |
| 3. 1 | | Passenger compartment heating (absorbing electric drive excess heat) | Releas e heat | Absorb heat | Relea se heat | Non-wo rking | Non-worki ng | Non-work ing | Worki ng | 1a&2a, 4a&3a | Wor king | Non-work ing | Wor king | Work ing | Non-work ing | 3b&4b | 1c& 2c, 3c& 4c |
| 3. 2 | | Passenger compartment heating (absorbing electric drive excess heat + environmental heat) | Releas e heat | Absorb heat | Relea se heat | Non-wo rking | Abso rb heat | Non-work ing | Worki ng | 1a&2a, 4a&3a | Wor king | Non-work ing | Wor king | Work ing | Non-work ing | 1b&4b | 1c& 2c, 3c& 4c |
| 3. 3 | | Passenger compartment heating (absorbing electric drive excess heat + stored heat of battery) | Releas e heat | Absorb heat | Relea se heat | Non-wo rking | Abso rb heat | Non-work ing | Worki ng | 1a&2a, 4a&3a | Wor king | Non-work ing | Wor king | Work ing | Wor king | 3b&4b | 1c& 4c, 3c& 2c |
| 3. 4 | | Passenger compartment heating + battery heating (absorbing electric drive excess heat) | Releas e heat | Absorb heat | Relea se heat | Release heat | Non-worki ng | Non-work ing | Worki ng | 1a&2a, 4a&3a | Wor king | Work ing | Wor king | Work ing | Wor king | 3b&4b | 1c& 2c, 3c& 4c |
| 3. 5 | | Passenger compartment heating + battery heating (absorbing electric drive excess heat + environmental heat) | Releas e heat | Absorb heat | Relea se heat | Release heat | Abso rb heat | Non-work ing | Worki ng | 1a&2a, 4a&3a | Wor king | Work ing | Wor king | Work ing | Wor king | 1b&4b | 1c& 2c, 3c& 4c |
| 3. | | Passenger | Releas | Absorb | Relea | Release | Non- | Non- | Worki | 1a&2a, | Wor | Work | Wor | Work | Wor | 3b&4b | 1c& |
| 6 | | compartment heating + battery heating (extremely low temperature, self-circulation technology) | e heat | heat | se heat | heat | worki ng | work ing | ng | 4a&3a | king | ing | king | ing | king | | 4c, 3c& 2c |
| 4. 1 | Spri ng and Autu mn & Wint er | Battery being heated by electric drive excess he (passenger compartment having no cooling/heating requirement) | Releas e heat | Absorb heat | Non-worki ng | Non-wo rking | Non-worki ng | Non-work ing | Non-w orking | Non-w orking | Non -wo rkin g | Non-work ing | Non-work ing | Work ing | Wor king | 1b&4b, 3b&4b proportional adjustment | 1c& 4c, 3c& 2c |
| 4. 2 | Wint er | Battery being heated by heat pump system (heat pump system absorbing electric drive excess heat) | Non-w orking | Absorb heat | Non-worki ng | Release heat | Non-worki ng | Non-work ing | Worki ng | 1a&2a, 4a&3a | Non -wo rkin g | Work ing | Non-work ing | Work ing | Wor king | 3b&4b | 1c& 2c, 3c& 4c |
| 4. 3 | | Battery being heated by heat pump system (heat pump absorbing electric drive excess heat + environmental heat) | Non-w orking | Absorb heat | Non-worki ng | Release heat | Abso rb heat | Non-work ing | Worki ng | 1a&2a, 4a&3a | Non -wo rkin g | Work ing | Non-work ing | Work ing | Wor king | 1b&4b | 1c& 2c, 3c& 4c |
| 4. 4 | | Battery being heated by heat pump system (self-circulation technology) | Non-w orking | Absorb heat | Non-worki ng | Release heat | Non-worki ng | Non-work ing | Worki ng | 1a&2a, 4a&3a | Non -wo rkin g | Work ing | Non-work ing | Work ing | Wor king | 3b&4b | 1c& 4c, 3c& 2c |

The modes 1.1-1.3 in Table 1 represent the situation when the external environment is in summer, wherein
1.1 Only passenger compartment cooling mode: At this time, the cold-hot core 220 is in a heat absorption state, the first heat exchanger 120 is used as a condenser to release heat, the second heat exchanger 140 is used as an evaporator to absorb heat, the third heat exchanger 150 is in a non-working state, the radiator 3121 is in a heat release state, the hot core 3131 is in a non-working state, the compressor 110 is in a working state, the first interface 1a of the first four-way valve 170 communicates with the fourth interface 4a, the third interface 3a communicates with the second interface 2a, the first expansion valve 130 is in a working state, the second expansion valve 160 is in a non-working state, the first water pump 210 is in a working state, the second water pump 3112 is in a working state, the third water pump 322 is in a non-working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

In this mode, as shown in Fig. 1, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, after passing through the first expansion valve 130, the refrigerant becomes a low-temperature and low-pressure liquid refrigerant and then flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. The refrigerant flowing out of the refrigerant channel in the second heat exchanger 140 becomes a high-temperature and low-pressure liquid refrigerant which then flows into the compressor 110 through the second interface 2a and the third interface 3a in the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and cooling by the second heat exchanger 140 to the cold-hot core 220 (which is a cold core at this time), so as to complete the cooling of the passenger compartment.

The second water pump 3112 conveys the electric drive cooling liquid subjected to heat exchange and heating by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the temperature of the electric drive cooling liquid in the first heat exchanger 120 is released to the external environment through the radiator 3121.

It should be noted that in the only passenger compartment cooling state, the electric drive circulation loop 310 and the battery circulation loop 320 are completely independent. Since the third heat exchanger 150 is in a non-working state, the second expansion valve 160 is in a non-working state, and the third water pump 322 is in a non-working state, there is no flowing cooling liquid in the battery circulation loop 320 at this time, that is, the battery circulation loop 320 does not work at this time. All cooling liquid will be injected into the passenger compartment cooling liquid circulation system 20. When flowing in the refrigerant circulation system 10, the refrigerant of the first heat exchanger 120 absorbs the heat of the refrigerant of the second heat exchanger 140, and then, the refrigerant in the second heat exchanger 140 exchanges heat with the passenger compartment cooling liquid, so as to accelerate the cooling time of the passenger compartment cooling liquid in the second heat exchanger 140 and increase the cooling speed of the passenger compartment cooling liquid, so that the passenger compartment can be cooled quickly.

1.2 Only battery cooling mode: At this time, the cold-hot core 220 is in a non-working state, the first heat exchanger 120 is used as a condenser to release heat, the second heat exchanger 140 is in a non-working state, the third heat exchanger 150 is used as an evaporator to absorb heat, the radiator 3121 is in a heat release state, the hot core 3131 is in a non-working state, the compressor 110 is in a working state, the first interface 1a of the first four-way valve 170 communicates with the fourth interface 4a, the third interface 3a communicates with the second interface 2a, the first expansion valve 130 is in a non-working state, the second expansion valve 160 is in a working state, the first water pump 210 is in a non-working state, the second water pump 3112 is in a working state, the third water pump 322 is in a working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

In this mode, as shown in Fig. 2, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, after passing through the second expansion valve 160, the refrigerant becomes a low-temperature and low-pressure liquid refrigerant and then flows into the refrigerant channel in the third heat exchanger 150, and the heat of the battery cooling liquid in the third heat exchanger 150 is absorbed, so that the third heat exchanger 150 is used as an evaporator to absorb the heat of the battery 321. The refrigerant flowing out of the refrigerant channel in the third heat exchanger 150 becomes a high-temperature and low-pressure liquid refrigerant which then flows into the compressor 110 through the second interface 2a and the third interface 3a in the first four-way valve 170 and becomes a high-temperature and high-pressure gaseous refrigerant through the compressor 110, so as to perform the next circulation flow.

In the cooling liquid circulation system, the second water pump 3112 conveys the electric drive cooling liquid subjected to heat exchange and heating by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the temperature of the electric drive cooling liquid in the first heat exchanger 120 is released to the external environment through the radiator 3121.

The third water pump 322 conveys the battery cooling liquid subjected to heat exchange and cooling by the third heat exchanger 150 sequentially to the cooling liquid channel of the battery 321, the third opening 3c of the second four-way valve 330 and the fourth opening 4c, and then, the battery cooling liquid returns to the third water pump 322, so as to complete the circulation of the battery cooling liquid, so that the battery cooling liquid subjected to heat exchange and cooling by the third heat exchanger 150 is conveyed into the cooling liquid channel of the battery 321 to absorb the heat of the battery 321, thereby completing the cooling of the battery 321.

1.3 Passenger compartment cooling + battery cooling mode: At this time, the cold-hot core 220 is in a heat absorption state, the first heat exchanger 120 is used as a condenser to release heat, the second heat exchanger 140 is used as an evaporator to absorb heat, the third heat exchanger 150 is used as an evaporator to absorb heat, the radiator 3121 is in a heat release state, the hot core 3131 is in a non-working state, the compressor 110 is in a working state, the first interface 1a of the first four-way valve 170 communicates with the fourth interface 4a, the third interface 3a communicates with the second interface 2a, the first expansion valve 130 is in a working state, the second expansion valve 160 is in a working state, the first water pump 210 is in a working state, the second water pump 3112 is in a working state, the third water pump 322 is in a working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

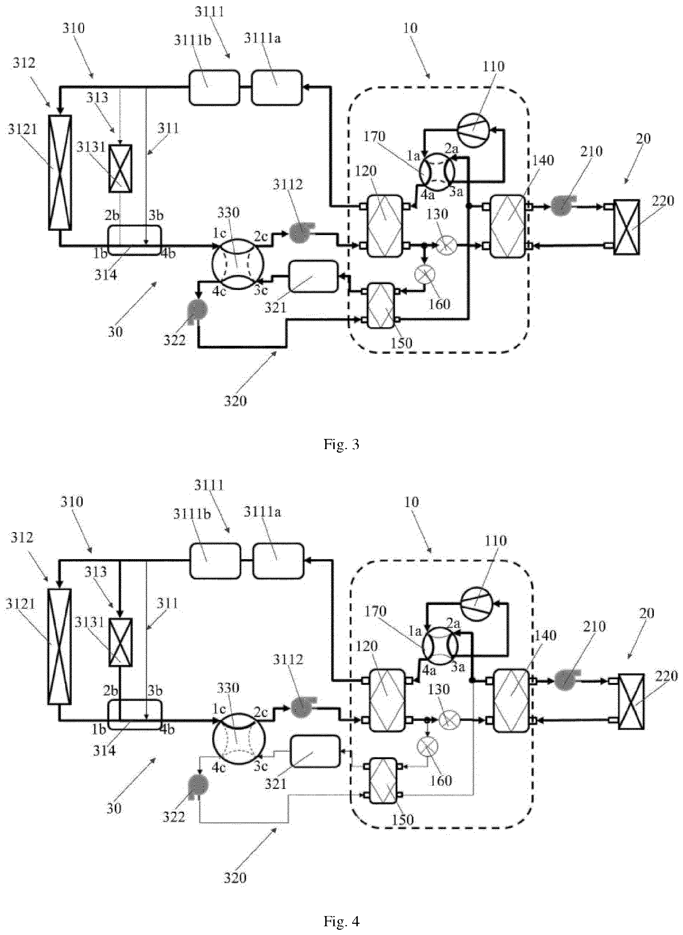

In this mode, as shown in Fig. 3, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, then after passing through the first expansion valve 130, part of the refrigerant becomes a low-temperature and low-pressure liquid refrigerant and the flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. After passing through the second expansion valve 160, the other part of the refrigerant becomes a low-temperature and low-pressure liquid refrigerant and then flows into the refrigerant channel in the third heat exchanger 150, and the heat of the battery cooling liquid in the third heat exchanger 150 is absorbed, so that the third heat exchanger 150 is used as an evaporator to absorb the heat of the battery 321. The refrigerant flowing out of the refrigerant channel in the second heat exchanger 140 and the refrigerant flowing out of the refrigerant channel in the third heat exchanger 150 become high-temperature and low-pressure liquid refrigerants which flow into the compressor 110 through the second interface 2a and the third interface 3a in the first four-way valve 170 and become a high-temperature and high-pressure gaseous refrigerants through the compressor 110, so as to perform the next circulation flow.

In the cooling liquid circulation system, the first water pump 210 conveys the passenger compartment cooling liquid subjected to heat exchange and cooling by the second heat exchanger 140 to the cold-hot core 220 (which is a cold core at this time), so as to complete the cooling of the passenger compartment.

The second water pump 3112 conveys the electric drive cooling liquid subjected to heat exchange and heating by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the temperature of the electric drive cooling liquid in the first heat exchanger 120 is released to the external environment through the radiator 3121.

The third water pump 322 conveys the battery cooling liquid subjected to heat exchange and cooling by the third heat exchanger 150 sequentially to the cooling liquid channel of the battery 321, the third opening 3c of the second four-way valve 330 and the fourth opening 4c, and then, the battery cooling liquid returns to the third water pump 322, so as to complete the circulation of the battery cooling liquid, so that the battery cooling liquid subjected to heat exchange and cooling by the third heat exchanger 150 is conveyed into the cooling liquid channel of the battery 321 to absorb the heat of the battery 321, thereby completing the cooling of the battery 321.

The modes 2.1-2.4 in Table 1 represent the situation when the external environment is in spring and autumn, wherein
2.1 Passenger compartment dehumidification mode: At this time, the cold-hot core 220 is in a heat absorption state, the first heat exchanger 120 is used as a condenser to release heat, the second heat exchanger 140 is used as an evaporator to absorb heat, the third heat exchanger 150 is in a non- working state, the radiator 3121 is in a heat release state, the hot core 3131 is in a heat release state, the compressor 110 is in a working state, the first interface 1a of the first four-way valve 170 communicates with the fourth interface 4a, the third interface 3a communicates with the second interface 2a, the first expansion valve 130 is in a working state, the second expansion valve 160 is in a non- working state, the first water pump 210 is in a working state, the second water pump 3112 is in an working state, the third water pump 322 is in a non-working state, proportional adjustment is performed between the first connecting opening 1b of the four-way proportional valve 314 and the fourth connecting opening 4b as well as between the second connecting opening 2b and the fourth connecting opening 4b, the first opening 1c of the second four-way valve 330 communicates with the second opening 2c, and the third opening 3c communicates with the fourth opening 4c.

In this mode, as shown in Fig. 4, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, after passing through the first expansion valve 130, the refrigerant becomes a low-temperature and low-pressure liquid refrigerant and then flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. The refrigerant flowing out of the refrigerant channel in the second heat exchanger 140 becomes a high-temperature and low-pressure liquid refrigerant which then flows into the compressor 110 through the second interface 2a and the third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and cooling by the second heat exchanger 140 to the cold-hot core 220 (which is a cold core at this time), so as to complete the cooling of the passenger compartment.

After the second water pump 3112 conveys the electric drive cooling liquid subjected to heat exchange and heating by the first heat exchanger 120 sequentially to the charging unit 3111a and the electric drive member 3111b, part of the electric drive cooling liquid flows into the radiator 3121 and flows out of the fourth connecting opening 4b of the four-way proportional valve 314 through the first connecting opening 1b of the four-way proportional valve 314; and the other part of the electric drive cooling liquid flows into the hot core 3131 and flows out of the fourth connecting opening 4b of the four-way proportional valve 314 through the second connecting opening 2b of the four-way proportional valve 314, and the electric drive cooling liquid flowing out of the fourth connecting opening 4b of the four-way proportional valve 314 sequentially flows through the first opening 1c of the second four-way valve 330 and the second opening 2c and then returns to the second water pump 3112, so as to complete the circulation of the electric drive cooling liquid. In this process, the hot core 3131 can absorb the electric drive excess heat and the heat of the electric drive cooling liquid of the first heat exchanger 120, and release the heat into the passenger compartment, so as to raise the temperature of the passenger compartment, thereby achieving a dehumidification function of the passenger compartment. Moreover, through the proportional adjustment between the first connecting opening 1b of the four-way proportional valve 314 and the fourth connecting opening 4b as well as between the second connecting opening 2b and the fourth connecting opening 4b, the four-way proportional valve 314 can adjust the proportion of the electric drive cooling liquid flowing into the radiating flow path 312 and the hot core flow path 313 according to actual needs, then the electric drive excess heat and the heat of the electric drive cooling liquid of the first heat exchanger 120 are proportionally distributed to the hot core 3131 and the radiator 3121, the heat is absorbed through the hot core 3131 and released into the passenger compartment, and the heat is released to the external environment through the radiator 3121, so as to adjust the heat released into the passenger compartment by the hot core 3131 by controlling the heat absorbed by the hot core 3131, thereby adjusting the dehumidification capability of the passenger compartment.

2.2 Passenger compartment dehumidification + battery cooling mode: At this time, the cold-hot core 220 is in a heat absorption state, the first heat exchanger 120 is used as a condenser to release heat, the second heat exchanger 140 is used as an evaporator to absorb heat, the third heat exchanger 150 is used as an evaporator to absorb heat, the radiator 3121 is in a heat release state, the hot core 3131 is in a heat release state, the compressor 110 is in a working state, the first interface 1a of the first four-way valve 170 communicates with the fourth interface 4a, the third interface 3a communicates with the second interface 2a, the first expansion valve 130 is in a working state, the second expansion valve 160 is in a working state, the first water pump 210 is in a working state, the second water pump 3112 is in a working state, the third water pump 322 is in a working state, proportional adjustment is performed between the first connecting opening 1b of the four-way proportional valve 314 and the fourth connecting opening 4b as well as between the second connecting opening 2b and the fourth connecting opening 4b, the first opening 1c of the second four-way valve 330 communicates with the second opening 2c, and the third opening 3c communicates with the fourth opening 4c.

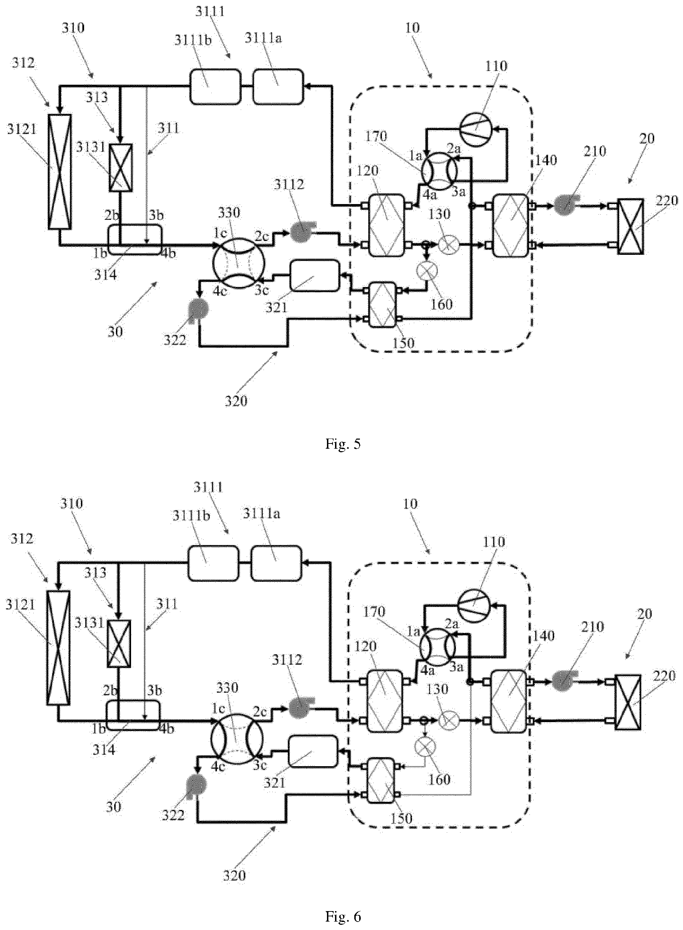

In this mode, as shown in Fig. 5, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, then after passing through the first expansion valve 130, part of the refrigerant becomes a low-temperature and low-pressure liquid refrigerant and then flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. After passing through the second expansion valve 160, the other part of the refrigerant becomes a low-temperature and low-pressure liquid refrigerant and then flows into the refrigerant channel in the third heat exchanger 150, and the heat of the battery cooling liquid in the third heat exchanger 150 is absorbed, so that the third heat exchanger 150 is used as an evaporator to absorb the heat of the battery 321. The refrigerant flowing out of the refrigerant channel in the second heat exchanger 140 and the refrigerant flowing out of the refrigerant channel in the third heat exchanger 150 become high-temperature and low-pressure liquid refrigerants which flow into the compressor 110 through the second interface 2a and the third interface 3a of the first four-way valve 170 and become a high-temperature and high-pressure gaseous refrigerants through the compressor 110, so as to perform the next circulation flow.

In the cooling liquid circulation system, the first water pump 210 conveys the passenger compartment cooling liquid subjected to heat exchange and cooling by the second heat exchanger 140 to the cold-hot core 220 (which is a cold core at this time), so as to complete the cooling of the passenger compartment.

After the second water pump 3112 conveys the electric drive cooling liquid subjected to heat exchange and heating by the first heat exchanger 120 sequentially to the charging unit 3111a and the electric drive member 3111b, part of the electric drive cooling liquid flows into the radiator 3121 and flows out of the fourth connecting opening 4b of the four-way proportional valve 314 through the first connecting opening 1b of the four-way proportional valve 314; and the other part of the electric drive cooling liquid flows into the hot core 3131 and flows out of the fourth connecting opening 4b of the four-way proportional valve 314 through the second connecting opening 2b of the four-way proportional valve 314, and the electric drive cooling liquid flowing out of the fourth connecting opening 4b of the four-way proportional valve 314 sequentially flows through the first opening 1c of the second four-way valve 330 and the second opening 2c and then returns to the second water pump 3112, so as to complete the circulation of the electric drive cooling liquid. In this process, the hot core 3131 can absorb the electric drive excess heat and the heat of the electric drive cooling liquid of the first heat exchanger 120, and release the heat into the passenger compartment, so as to raise the temperature of the passenger compartment, thereby achieving a dehumidification function of the passenger compartment. Moreover, through the proportional adjustment between the first connecting opening 1b of the four-way proportional valve 314 and the fourth connecting opening 4b as well as between the second connecting opening 2b and fourth connecting opening 4b, the four-way proportional valve 314 can adjust the proportion of the electric drive cooling liquid flowing into the radiating flow path 312 and the hot core flow path 313 according to actual needs, then the electric drive excess heat and the heat of the electric drive cooling liquid of the first heat exchanger 120 are proportionally distributed to the hot core 3131 and the radiator 3121, the heat is absorbed through the hot core 3131 and released into the passenger compartment, and the heat is released to the external environment through the radiator 3121, so as to adjust the heat released into the passenger compartment by the hot core 3131 by controlling the heat absorbed by the hot core 3131, thereby adjusting the dehumidification capability of the passenger compartment.

The third water pump 322 conveys the battery cooling liquid subjected to heat exchange and cooling by the third heat exchanger 150 sequentially to the cooling liquid channel of the battery 321, the third opening 3c of the second four-way valve 330 and the fourth opening 4c, and then, the battery cooling liquid returns to the third water pump 322, so as to complete the circulation of the battery cooling liquid, so that the battery cooling liquid subjected to heat exchange and cooling by the third heat exchanger 150 is conveyed into the cooling liquid channel of the battery 321 to absorb the heat of the battery 321, thereby completing the cooling of the battery 321.

2.3 Passenger compartment dehumidification + battery heating mode: At this time, the cold-hot core 220 is in a heat absorption state, the first heat exchanger 120 is used as a condenser to release heat, the second heat exchanger 140 is used as an evaporator to absorb heat, the third heat exchanger 150 does not work, the radiator 3121 is in a heat release state, the hot core 3131 is in a heat release state, the compressor 110 is in a working state, the first interface 1a of the first four-way valve 170 communicates with the fourth interface 4a, the third interface 3a communicates with the second interface 2a, the first expansion valve 130 is in a working state, the second expansion valve 160 is in a non-working state, the first water pump 210 is in a working state, the second water pump 3112 is in a working state, the third water pump 322 is in a working state, proportional adjustment is performed between the first connecting opening 1b of the four-way proportional valve 314 and the fourth connecting opening 4b as well as between the second connecting opening 2b and the fourth connecting opening 4b, the first opening 1c of the second four-way valve 330 communicates with the fourth opening 4c, and the third opening 3c communicates with the second opening 2c.

In this mode, as shown in Fig. 6, in the refrigerant circulation system 10, the high-temperature and high-pressure gaseous refrigerant flowing out of the compressor 110 flows into the refrigerant channel in the first heat exchanger 120 through the first interface 1a and the fourth interface 4a of the first four-way valve 170, and the heat is transmitted to the electric drive cooling liquid in the first heat exchanger 120, so that the first heat exchanger 120 is used as a condenser to release heat to the engine room cooling liquid circulation system 30. The refrigerant flowing out of the refrigerant channel in the first heat exchanger 120 becomes a low-temperature and high-pressure liquid refrigerant, after passing through the first expansion valve 130, the refrigerant becomes a low-temperature and low-pressure liquid refrigerant and then flows into the refrigerant channel in the second heat exchanger 140, and the heat of the passenger compartment cooling liquid in the second heat exchanger 140 is absorbed, so that the second heat exchanger 140 is used as an evaporator to absorb the heat in the passenger compartment. The refrigerant flowing out of the refrigerant channel in the second heat exchanger 140 becomes a high-temperature and low-pressure liquid refrigerant which then flows into the compressor 110 through the second interface 2a and the third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and cooling by the second heat exchanger 140 to the cold-hot core 220 (which is a cold core at this time), so as to complete the cooling of the passenger compartment.

After the second water pump 3112 conveys the electric drive cooling liquid subjected to heat exchange and heating by the first heat exchanger 120 sequentially to the charging unit 3111a and the electric drive member 3111b, part of the electric drive cooling liquid flows into the radiator 3121 and flows out of the fourth connecting opening 4b of the four-way proportional valve 314 through the first connecting opening 1b of the four-way proportional valve 314; and the other part of the electric drive cooling liquid flows into the hot core 3131 and flows out of the fourth connecting opening 4b of the four-way proportional valve 314 through the second connecting opening 2b of the four-way proportional valve 314, and the electric drive cooling liquid flowing out of the fourth connecting opening 4b of the four-way proportional valve 314 sequentially flows through the first opening 1c of the second four-way valve 330, the fourth opening 4c, the third water pump 322, the cooling liquid channel of the third heat exchanger 150, the cooling liquid channel of the battery 321, the third opening 3c of the second four-way valve 330 and the second opening 2c, and then returns to the second water pump 3112, so as to complete the circulation of the cooling liquid. In this process, the hot core 3131 can absorb the electric drive excess heat and the heat of the electric drive cooling liquid of the first heat exchanger 120, and release the heat into the passenger compartment, so as to raise the temperature of the passenger compartment, thereby achieving a dehumidification function of the passenger compartment. Moreover, through the proportional adjustment between the first connecting opening 1b of the four-way proportional valve 314 and the fourth connecting opening 4b as well as between the second connecting opening 2b and the fourth connecting opening 4b, the four-way proportional valve 314 can adjust the proportion of the electric drive cooling liquid flowing into the radiating flow path 312 and the hot core flow path 313 according to actual needs, then the electric drive excess heat and the heat of the electric drive cooling liquid of the first heat exchanger 120 are proportionally distributed to the hot core 3131 and the radiator 3121, the heat is absorbed through the hot core 3131 and released into the passenger compartment, and the heat is released to the external environment through the radiator 3121, so as to adjust the heat released into the passenger compartment by the hot core 3131 by controlling the heat absorbed by the hot core 3131, thereby adjusting the dehumidification capability of the passenger compartment. Furthermore, the battery 321 can also absorb the electric drive excess heat and the heat of the electric drive cooling liquid of the first heat exchanger 120, so as to complete the heating of the battery 321.

It should be noted that the hot core flow path 313 and the radiating flow path 312 are arranged in parallel. When the passenger compartment needs to be dehumidified, the hot core 3131 works to absorb the electric drive excess heat and the heat of the electric drive cooling liquid of the first heat exchanger 120 and release the heat into the passenger compartment, so as to complete the dehumidification process of the passenger compartment. The heat of the electric drive cooling liquid in the first heat exchanger 120 is obtained by exchanging heat with the refrigerant in the first heat exchanger 120. In this process, the hot core 3131 in the hot core flow path 313 and the radiator 3121 in the radiating flow path 312 can simultaneously absorb the heat of the electric drive cooling liquid in the first heat exchanger 120, so as to improve the cooling effect of the refrigerant in the refrigerant channel of the first heat exchanger 120, thereby increasing the working efficiency of the compressor 110 in the refrigerant circulation system 10, and reducing the power consumption of the compressor 110. Furthermore, the four-way proportional valve 314 can adjust the proportion of the cooling liquid flowing into the radiating flow path 312 and the hot core flow path 313 according to actual needs, so as to adjust the heat released into the passenger compartment by the hot core 3131 by controlling the heat of the cooling liquid that can be absorbed by the hot core 3131, thereby adjusting the dehumidification capability of the passenger compartment. Therefore, the four-way proportional valve 314 can steplessly adjust the dehumidification capability of the hot core 3131.

2.4 Battery being cooled by radiator mode: At this time, the cold-hot core 220 is in a non-working state, the first heat exchanger 120 is in a non-working state, the second heat exchanger 140 is in a non-working state, the third heat exchanger 150 is in a non-working state, the radiator 3121 is in a heat release state, the hot core 3131 is in a non-working state, the compressor 110 is in a non-working state, the first four-way valve 170 is in a non-working state, the first expansion valve 130 is in a non-working state, the second expansion valve 160 is in a non-working state, the first water pump 210 is in a non-working state, the second water pump 3112 is in a working state, the third water pump 322 is in a working state, the first connecting opening 1b of the four-way proportional valve 314 communicates with the fourth connecting opening 4b, the first opening 1c of the second four-way valve 330 communicates with the fourth opening 4c, and the third opening 3c communicates with the second opening 2c.

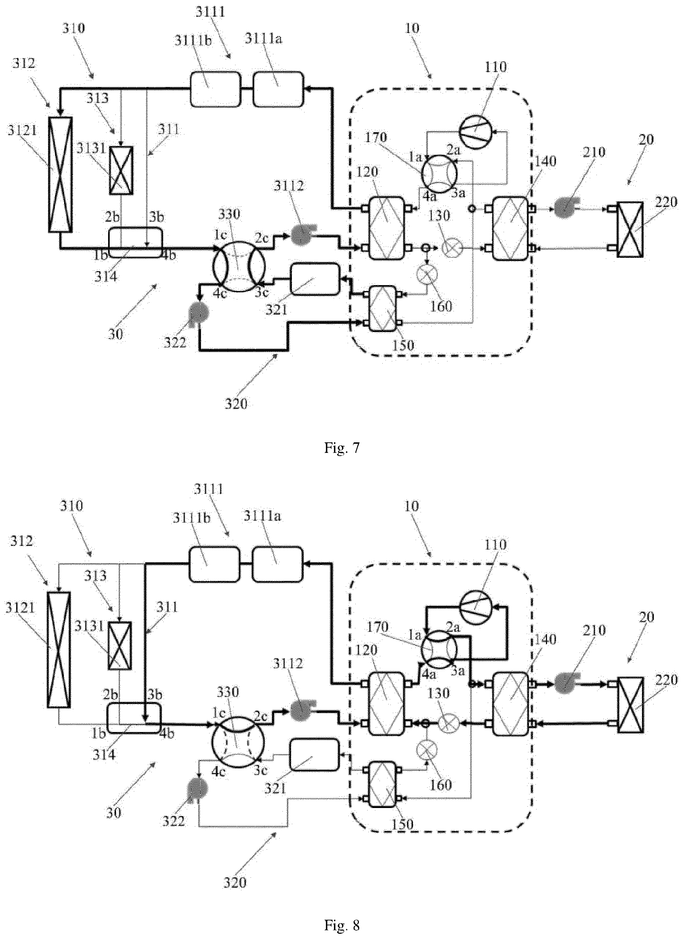

In this mode, as shown in Fig. 7, the refrigerant circulation system 10 does not work. In the cooling liquid circulation system, the second water pump 3112 conveys the cooling liquid sequentially to the charging unit 3111a, the electric drive member 3111b, the radiator 3121, the first connecting opening 1b of the four-way proportional valve 314, the fourth connecting opening 4b, the first opening 1c of the second four-way valve 330, the fourth opening 4c, the third water pump 322, the cooling liquid channel of the third heat exchanger 150, the cooling liquid channel of the battery 321, the third opening 3c of the second four-way valve 330 and the second opening 2c, and then, the cooling liquid returns to the second water pump 3112, so as to complete the circulation of the cooling liquid. In this process, the battery 321 can release heat to the external environment through the radiator 3121, so as to complete the cooling of the battery 321 through the radiator 3121.

The modes 3.1-3.6 in Table 1 represent the situation when the external environment is in winter, wherein
3.1 Passenger compartment heating (absorbing electric drive excess heat) mode: At this time, the cold-hot core 220 is in a heat release state, the first heat exchanger 120 is used as an evaporator to absorb heat, the second heat exchanger 140 is used as a condenser to release heat, the third heat exchanger 150 is in a non-working state, the radiator 3121 is in a non-working state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a working state, the second expansion valve 160 is in a non-working state, the first water pump 210 is in a working state, the second water pump 3112 is in a working state, the third water pump 322 is in a non-working state, the third connecting opening 3b of the four-way proportional valve 314 communicates with the fourth connecting opening 4b, the first opening 1c of the second four-way valve 330 communicates with the second opening 2c, and the third opening 3c communicates with the fourth opening 4c.

In this mode, as shown in Fig. 8, in the refrigerant circulation system 10, the high-temperature and high-pressure gaseous refrigerant flowing out of the compressor 110 flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. Then, the low-temperature and low-pressure liquid refrigerant flowing out of the first expansion valve 130 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the electric drive excess heat is absorbed through the electric drive cooling liquid of the first heat exchanger 120, then the electric drive cooling liquid of the first heat exchanger 120 exchanges heat with the refrigerant, and the heat is transmitted into the refrigerant circulation system 10. When the refrigerant flows in the refrigerant circulation system 10, the heat is transmitted into the refrigerant of the second heat exchanger 140, and the refrigerant of the second heat exchanger 140 exchanges heat with the passenger compartment cooling liquid, so that the heat is transmitted into the passenger compartment cooling liquid circulation system 20, and then, the electric drive excess heat is finally transmitted into the passenger compartment to heat the passenger compartment.

3.2 Passenger compartment heating (absorbing electric drive excess heat + environmental heat) mode: At this time, the cold-hot core 220 is in a heat release state, the first heat exchanger 120 is used as an evaporator to absorb heat, the second heat exchanger 140 is used as a condenser to release heat, the third heat exchanger 150 is in a non-working state, the radiator 3121 is in a heat absorption state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a working state, the second expansion valve 160 is in a non-working state, the first water pump 210 is in a working state, the second water pump 3112 is in a working state, the third water pump 322 is in a non-working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

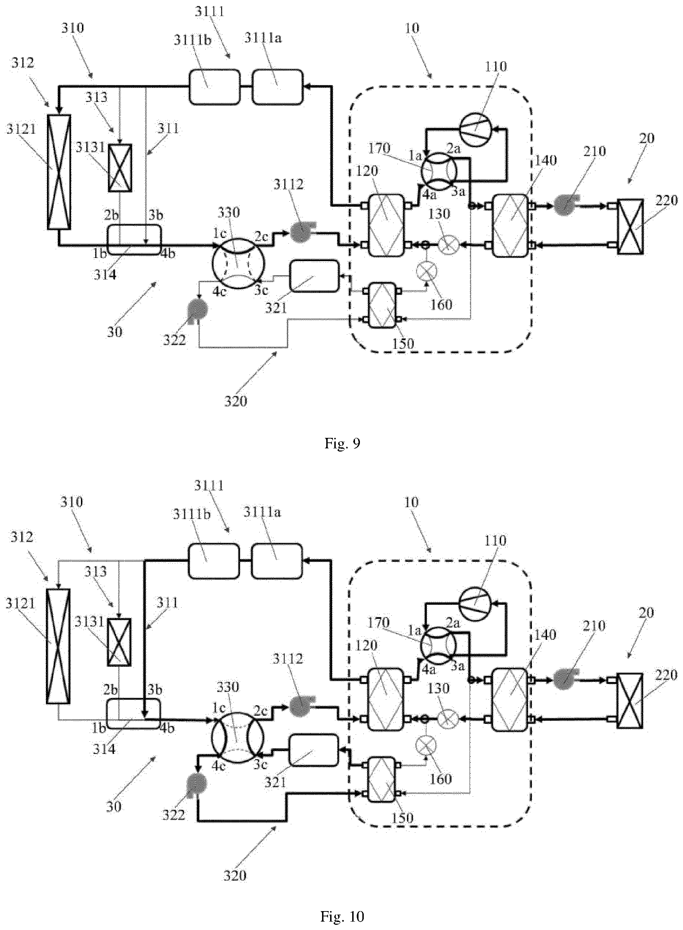

In this mode, as shown in Fig. 9, in the refrigerant circulation system 10, the high-temperature and high-pressure gaseous refrigerant flowing out of the compressor 110 flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. Then, the low-temperature and low-pressure liquid refrigerant flowing out of the first expansion valve 130 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat and the heat in the environment through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the electric drive excess heat and the heat in the external environment absorbed by the radiator 3121 are absorbed through the electric drive cooling liquid of the first heat exchanger 120, then the electric drive cooling liquid of the first heat exchanger 120 exchanges heat with the refrigerant, and the heat is transmitted into the refrigerant circulation system 10. When the refrigerant flows in the refrigerant circulation system 10, the heat is transmitted into the refrigerant of the second heat exchanger 140, and the refrigerant of the second heat exchanger 140 exchanges heat with the passenger compartment cooling liquid, so that the heat is transmitted into the passenger compartment cooling liquid circulation system 20, and then, the electric drive excess heat and the heat in the external environment are finally transmitted into the passenger compartment to heat the passenger compartment.

It should be noted that in the only passenger compartment heating state, the electric drive circulation loop 310 and the battery circulation loop 320 are completely independent. Since the third heat exchanger 150 is in a non-working state, the second expansion valve 160 is in a non-working state, and the third water pump 322 is in a non-working state, there is no flowing cooling liquid in the battery circulation loop 320 at this time, that is, the battery circulation loop 320 does not work at this time. All cooling liquid will be injected into the passenger compartment cooling liquid circulation system 20. When the refrigerant of the first heat exchanger 120 flows in the refrigerant circulation system 10, the heat is transmitted into the refrigerant of the second heat exchanger 140, and the refrigerant in the second heat exchanger 140 exchanges heat with the passenger compartment cooling liquid, so as to accelerate the heating time of the cooling liquid in the second heat exchanger 140 and increase the heating speed of the passenger compartment cooling liquid, so that the passenger compartment can be heated quickly.

3.3 Passenger compartment heating (absorbing electric drive excess heat + stored heat of battery) mode: At this time, the cold-hot core 220 is in a heat release state, the first heat exchanger 120 is used as an evaporator to absorb heat, the second heat exchanger 140 is used as a condenser to release heat, the third heat exchanger 150 is in a non-working state, the radiator 3121 is in a heat absorption state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a working state, the second expansion valve 160 is in a non-working state, the first water pump 210 is in a working state, the second water pump 3112 is in a working state, the third water pump 322 is in a working state, the third connecting opening 3b of the four-way proportional valve 314 communicates with the fourth connecting opening 4b, the first opening 1c of the second four-way valve 330 communicates with the fourth opening 4c, and the third opening 3c communicates with the second opening 2c.

**In** this mode, as shown in Fig. 10, in the refrigerant circulation system 10, the high-temperature and high-pressure gaseous refrigerant flowing out of the compressor 110 flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. Then, the low-temperature and low-pressure liquid refrigerant flowing out of the first expansion valve 130 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

**In** the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330, the fourth opening 4c, the third water pump 322, the cooling liquid channel of the third heat exchanger 150, the cooling liquid channel of the battery 321, the third opening 3c of the second four-way valve 330 and the second opening 2c, and then, the electric drive cooling liquid returns to the second water pump 3112, so as to complete the circulation of the cooling liquid, so that the electric drive excess heat and the stored heat of the battery 321 are absorbed through the electric drive cooling liquid of the first heat exchanger 120, then the electric drive cooling liquid of the first heat exchanger 120 exchanges heat with the refrigerant, and the heat is transmitted into the refrigerant circulation system 10. When the refrigerant flows in the refrigerant circulation system 10, the heat is transmitted into the refrigerant of the second heat exchanger 140, and the refrigerant of the second heat exchanger 140 exchanges heat with the passenger compartment cooling liquid, so that the heat is transmitted into the passenger compartment cooling liquid circulation system 20, and then, the electric drive excess heat and the stored heat of the battery 321 are finally transmitted into the passenger compartment to heat the passenger compartment.

3.4 Passenger compartment heating + battery heating (absorbing electric drive excess heat) mode: At this time, the cold-hot core 220 is in a heat release state, the first heat exchanger 120 is used as an evaporator to absorb heat, the second heat exchanger 140 is used as a condenser to release heat, the third heat exchanger 150 is used as a condenser to release heat, the radiator 3121 is in a non-working state, the hot core 3131 is in a non-working state, the compressor 110 is in an working state, the first interface 1a of the first four-way valve 170 communicates with the second interface 2a, the third interface 3a communicates with the fourth interface 4a, the first expansion valve 130 is in a working state, the second expansion valve 160 is in a working state, the first water pump 210 is in a working state, the second water pump 3112 is in a working state, the third water pump 322 is in a working state, the third connecting opening 3b of the four-way proportional valve 314 communicates with the fourth connecting opening 4b, the first opening 1c of the second four-way valve 330 communicates with the second opening 2c, and the third opening 3c communicates with the fourth opening 4c.

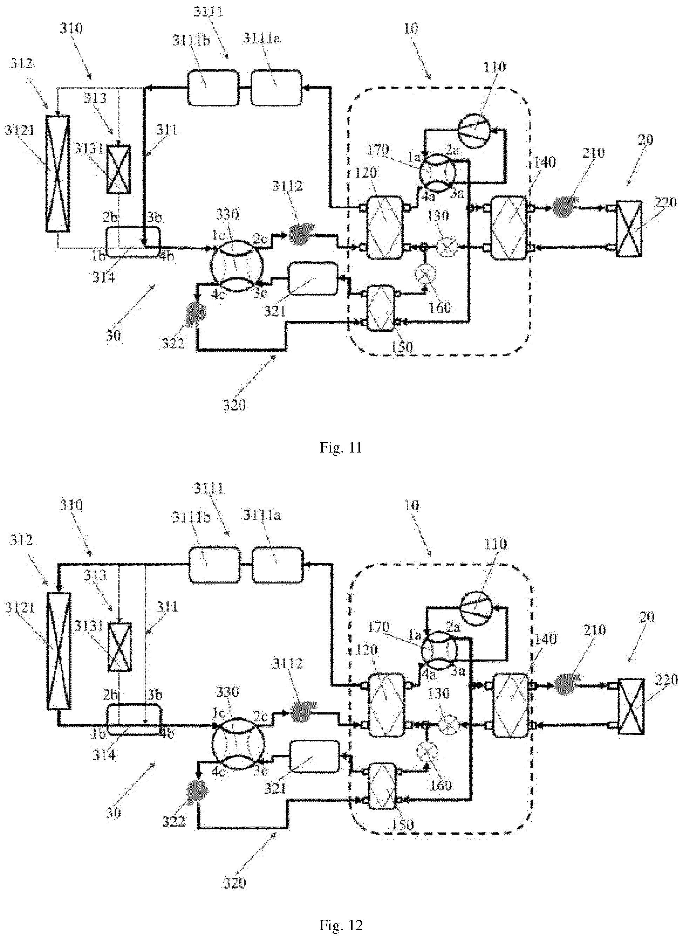

In this mode, as shown in Fig. 11, in the refrigerant circulation system 10, the high-temperature and high-pressure gaseous refrigerant flowing out of the compressor 110 partially flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. The other part of the high-temperature and high-pressure gaseous refrigerant flowing out of the compressor 110 flows into the refrigerant channel in the third heat exchanger 150, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerants flowing out of the first expansion valve 130 and the second expansion valve 160 flow into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and third interface 3a of the first four-way valve 170 and becomes a high-temperature and high-pressure gaseous refrigerant through the compressor 110, so as to perform the next circulation flow.

**In** the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the electric drive excess heat is absorbed through the electric drive cooling liquid of the first heat exchanger 120, then the electric drive cooling liquid of the first heat exchanger 120 exchanges heat with the refrigerant, and the heat is transmitted into the refrigerant circulation system 10. When the refrigerant flows in the refrigerant circulation system 10, part of the heat is transmitted into the refrigerant of the second heat exchanger 140, and the refrigerant of the second heat exchanger 140 exchanges heat with the passenger compartment cooling liquid, so that part of the electric drive excess heat is transmitted into the passenger compartment to heat the passenger compartment.

The third water pump 322 conveys the battery cooling liquid subjected to heat exchange and heating by the third heat exchanger 150 to the cooling liquid channel of the battery 321, the third opening 3c of the second four-way valve 330 and the fourth opening 4c, and then, the battery cooling liquid returns to the second water pump 3112, so as to complete the circulation of the battery cooling liquid, so that the electric drive excess heat is absorbed through the electric drive cooling liquid of the first heat exchanger 120, then the electric drive cooling liquid of the first heat exchanger 120 exchanges heat with the refrigerant, and the heat is transmitted into the refrigerant in the refrigerant circulation system 10. Moreover, when the refrigerant flows in the refrigerant circulation system 10, the other part of the heat is transmitted into the refrigerant of the third heat exchanger 150, and the refrigerant of the third heat exchanger 150 exchanges heat with the battery cooling liquid, so that the other part of the electric drive excess heat is transmitted into the battery 321 to heat the battery 321.

3.5 Passenger compartment heating + battery heating (absorbing electric drive excess heat + environmental heat) mode: At this time, the cold-hot core 220 is in a heat release state, the first heat exchanger 120 is used as an evaporator to absorb heat, the second heat exchanger 140 is used as a condenser to release heat, the third heat exchanger 150 is used as a condenser to release heat, the radiator 3121 is in a heat absorption state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a working state, the second expansion valve 160 is in a working state, the first water pump 210 is in a working state, the second water pump 3112 is in a working state, the third water pump 322 is in a working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

In this mode, as shown in Fig. 12, in the refrigerant circulation system 10, the high-temperature and high-pressure gaseous refrigerant flowing out of the compressor 110 partially flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. The other part of the high-temperature and high-pressure gaseous refrigerant flowing out of the compressor 110 flows into the refrigerant channel in the third heat exchanger 150, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerants flowing out of the first expansion valve 130 and the second expansion valve 160 flow into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat and the heat in the environment through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid, so that the electric drive excess heat and the heat in the external environment absorbed by the radiator 3121 are absorbed through the electric drive cooling liquid of the first heat exchanger 120, then the electric drive cooling liquid of the first heat exchanger 120 exchanges heat with the refrigerant, and the heat is transmitted into the refrigerant in the refrigerant circulation system 10. Moreover, when the refrigerant flows in the refrigerant circulation system 10, part of the heat is transmitted into the refrigerant of the second heat exchanger 140, and the refrigerant of the second heat exchanger 140 exchanges heat with the passenger compartment cooling liquid, so that part of the electric drive excess heat and heat in the external environment absorbed by the radiator 3121 is transmitted into the passenger compartment to heat the passenger compartment.

The third water pump 322 conveys the battery cooling liquid subjected to heat exchange and heating by the third heat exchanger 150 to the cooling liquid channel of the battery 321, the third opening 3c of the second four-way valve 330 and the fourth opening 4c, and then, the battery cooling liquid returns to the second water pump 3112, so as to complete the circulation of the battery cooling liquid, so that the electric drive excess heat and the heat in the external environment absorbed by the radiator 3121 are absorbed through the electric drive cooling liquid of the first heat exchanger 120, then the electric drive cooling liquid of the first heat exchanger 120 exchanges heat with the refrigerant, and the heat is transmitted into the refrigerant in the refrigerant circulation system 10. Moreover, when the refrigerant flows in the refrigerant circulation system 10, the other part of the heat is transmitted into the refrigerant of the third heat exchanger 150, and the refrigerant of the third heat exchanger 150 exchanges heat with the battery cooling liquid, so that the other part of the electric drive excess heat and heat in the external environment absorbed by the radiator 3121 are transmitted into the battery 321 to heat the battery 321.

3.6 Passenger compartment heating + battery heating (extremely low temperature, self-circulation technology) mode: At this time, the cold-hot core 220 is in a heat release state, the first heat exchanger 120 is used as an evaporator to absorb heat, the second heat exchanger 140 is used as a condenser to release heat, the third heat exchanger 150 is used as a condenser to release heat, the radiator 3121 is in a non-working state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a working state, the second expansion valve 160 is in a working state, the first water pump 210 is in a working state, the second water pump 3112 is in a working state, the third water pump 322 is in a working state, the third connecting opening 3b of the four-way proportional valve 314 communicates with the fourth connecting opening 4b, the first opening 1c of the second four-way valve 330 communicates with the fourth opening 4c, and the third opening 3c communicates with the second opening 2c.

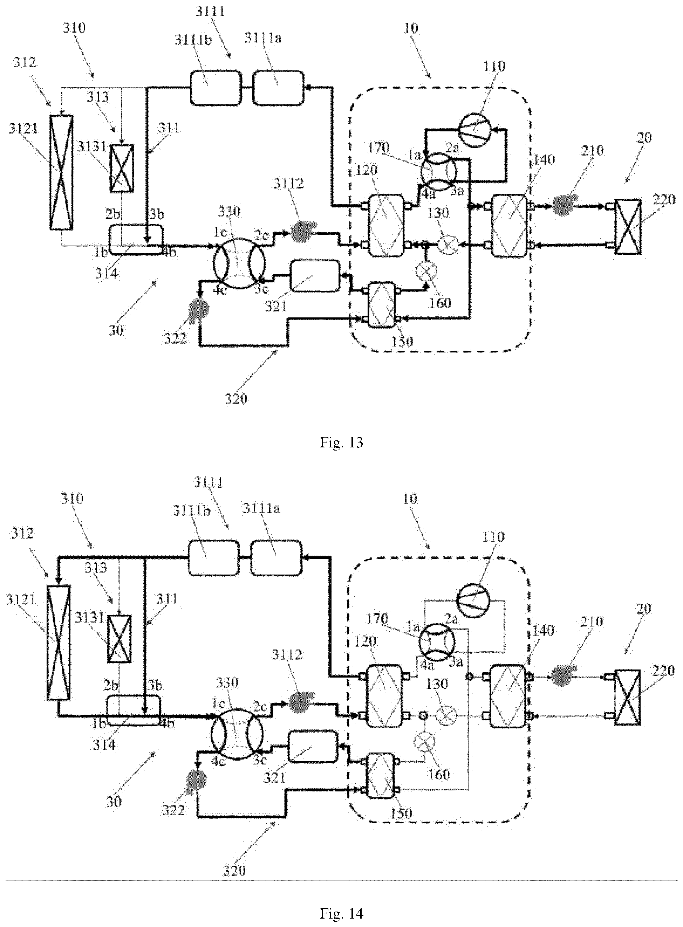

In this mode, as shown in Fig. 13, in the refrigerant circulation system 10, the high-temperature and high-pressure gaseous refrigerant flowing out of the compressor 110 partially flows into the refrigerant channel in the second heat exchanger 140 through the first interface 1a and the second interface 2a of the first four-way valve 170, and the heat is transmitted to the passenger compartment cooling liquid in the second heat exchanger 140, so that the second heat exchanger 140 is used as a condenser to release heat into the passenger compartment. The refrigerant flowing out of the refrigerant channel of the second heat exchanger 140 becomes a low-temperature and high-pressure liquid refrigerant which then passes through the first expansion valve 130 to become a low-temperature and low-pressure liquid refrigerant. The other part of the high-temperature and high-pressure gaseous refrigerant flowing out of the compressor 110 flows into the refrigerant channel in the third heat exchanger 150, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerants flowing out of the first expansion valve 130 and the second expansion valve 160 flow into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the first water pump 210 conveys the passenger compartment cooling liquid subjected to heat exchange and heating by the second heat exchanger 140 to the cold-hot core 220 (which is a hot core at this time), so as to complete the heating of the passenger compartment.

The second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330, the fourth opening 4c, the third water pump 322, the cooling liquid channel of the third heat exchanger 150, the cooling liquid channel of the battery 321, the third opening 3c of the second four-way valve 330 and the second opening 2c, and then, the electric drive cooling liquid returns to the second water pump 3112, so as to complete the circulation of the cooling liquid. At this time, the first heat exchanger 120 and the third heat exchanger 150 are connected in series, and the cooling liquid flows from the battery cooling liquid channel of the third heat exchanger 150 to the electric drive cooling liquid channel of the first heat exchanger 120, so that in extreme cold weather, the heat released by using the third heat exchanger 150 as a condenser is transferred into the first heat exchanger 120, and the heat is transmitted into the refrigerant circulation system 10 through the heat exchange between the cooling liquid in the first heat exchanger 120 and the refrigerant, so as to maintain the self-circulation operation of the refrigerant circulation system 10 at a low temperature. Moreover, when flowing from the battery cooling liquid channel of the third heat exchanger 150 to the electric drive cooling liquid channel of the first heat exchanger 120, the cooling liquid flows through the second water pump 3112, and the second water pump 3112 absorbs the heat, so as to avoid the problem of frosting and shutdown of the second water pump 3112 in extreme low-temperature weather. Furthermore, since the refrigerant channel in the first heat exchanger 120 communicates with the refrigerant channel in the second heat exchanger 140, the refrigerant in the first heat exchanger 120 can also flow through the refrigerant channel in the second heat exchanger 140; and through the heat exchange between the passenger compartment cooling liquid in the second heat exchanger 140 and the refrigerant, the excess heat in the refrigerant circulation system 10 is transmitted into the passenger compartment cooling liquid circulation system 20 and released into the passenger compartment to generate heat, so as to omit an air-assisted electric heater or a high-pressure water heater on a cooling liquid side in a passenger compartment in a traditional thermal management system, thereby greatly reducing the number of parts in the thermal management system of the vehicle, and greatly reducing the complexity of the loop.

The modes 4.1-4.4 in Table 1 represent the situation when the external environment is in winter or spring and autumn, wherein
4.1 Battery being heated by electric drive excess heat (passenger compartment having no cooling/heating requirement) mode: At this time, the cold-hot core 220 is in a heat release state, the first heat exchanger 120 is used as an evaporator to absorb heat, the second heat exchanger 140 is in a non-working state, the third heat exchanger 150 is in a non-working state, the radiator 3121 is in a non-working state, the hot core 3131 is in a non-working state, the compressor 110 is in a non-working state, the first four-way valve 170 is in a non-working state, the first expansion valve 130 is in a non-working state, the second expansion valve 160 is in a non-working state, the first water pump 210 is in a non-working state, the second water pump 3112 is in a working state, the third water pump 322 is in an working state, proportional adjustment is performed between the first connecting opening 1b of the four-way proportional valve 314 and the fourth connecting opening 4b as well as between the third connecting opening 3b and fourth connecting opening 4b, the first opening 1c of the second four-way valve 330 communicates with the fourth opening 4c, and the third opening 3c communicates with the second opening 2c.

In this mode, as shown in Fig. 14, the refrigerant circulation system 10 does not work. In the cooling liquid circulation system, after the second water pump 3112 conveys the cooling liquid in the first heat exchanger 120 sequentially to the charging unit 3111a and the electric drive member 3111b, part of the electric drive cooling liquid flows into the radiator 3121 and flows out of the fourth connecting opening 4b of the four-way proportional valve 314 through the first connecting opening 1b of the four-way proportional valve 314; and the other part of the electric drive cooling liquid flows into the third connecting opening 3b of the four-way proportional valve 314 and flows out of the fourth connecting opening 4b of the four-way proportional valve 314. The electric drive cooling liquid flowing out of the fourth connecting opening 4b of the four-way proportional valve 314 sequentially flows through the first opening 1c of the second four-way valve 330, the fourth opening 4c, the third water pump 322, the cooling liquid channel of the third heat exchanger 150, the cooling liquid channel of the battery 321, the third opening 3c of the second four-way valve 330 and the second opening 2c, and then returns to the second water pump 3112, so as to complete the circulation of the cooling liquid. In this process, the battery 321 can absorb the electric drive excess heat and the heat of the electric drive cooling liquid of the first heat exchanger 120, so as to heat the battery 321. Moreover, through the proportional adjustment between the first connecting opening 1b of the four-way proportional valve 314 and the fourth connecting opening 4b as well as between the third connecting opening 3b and fourth connecting opening 4b, the four-way proportional valve 314 can adjust the proportion of the electric drive cooling liquid flowing into the radiating flow path 312 and directly flowing through the electric drive flow path according to actual needs, and then, the electric drive excess heat is proportionally distributed to the electric drive flow path and the radiating flow path 312, so as to control the electric drive excess heat absorbed by the battery 321 by controlling the flow rate of the cooling liquid in the electric drive flow path, thereby adjusting the capacity of the electric drive excess heat absorbed by the battery 321 according to the temperature of the external environment. For example, in spring and autumn, part of the electric drive excess heat can be distributed to the radiating flow path 312; and in winter, the electric drive excess heat can be completely distributed to the electric drive flow path, so as to heat the battery 321.

4.2 Battery being heated by heat pump system (heat pump system absorbing electric drive excess heat) mode: At this time, the cold-hot core 220 is in a non-working state, the first heat exchanger 120 is used as an evaporator to absorb heat, the second heat exchanger 140 is in a non-working state, the third heat exchanger 150 is used as a condenser to release heat, the radiator 3121 is in a non-working state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a non-working state, the second expansion valve 160 is in a working state, the first water pump 210 is in a non-working state, the second water pump 3112 is in a working state, the third water pump 322 is in a working state, the third connecting opening 3b of the four-way proportional valve 314 communicates with the fourth connecting opening 4b, the first opening 1c of the second four-way valve 330 communicates with the second opening 2c, and the third opening 3c communicates with the fourth opening 4c.

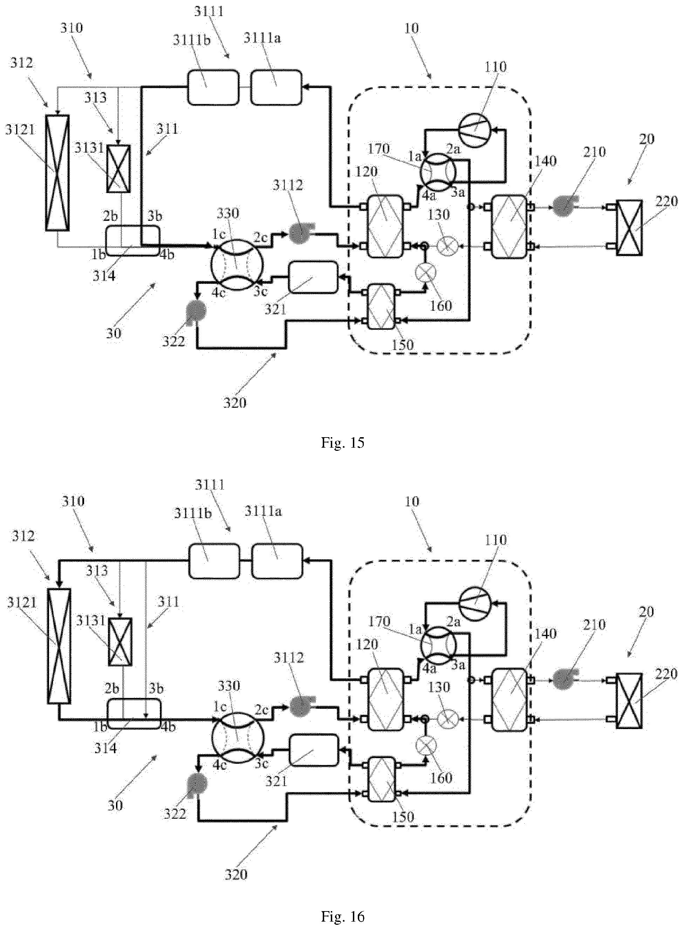

In this mode, as shown in Fig. 15, in the refrigerant circulation system 10, the high-temperature and high-pressure gaseous refrigerant flowing out of the compressor 110 flows into the refrigerant channel in the third heat exchanger 150 through the first interface 1a and the second interface 2a of the first four-way valve 170, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerant flowing out of the second expansion valve 160 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid. The third water pump 322 conveys the battery cooling liquid subjected to heat exchange and heating by the third heat exchanger 150 sequentially to the cooling liquid channel of the battery 321, the third opening 3c of the second four-way valve 330 and the fourth opening 4c, and then, the battery cooling liquid returns to the third water pump 322, so as to complete the circulation of the battery cooling liquid. In this process, the first heat exchanger 120 absorbs the electric drive excess heat and exchanges heat with the third heat exchanger 150 to transmit the heat into the battery 321, so as to heat the battery 321.

4.3 Battery being heated by heat pump system (heat pump absorbing electric drive excess heat + environmental heat) mode: At this time, the cold-hot core 220 is in a non-working state, the first heat exchanger 120 is used as an evaporator to absorb heat, the second heat exchanger 140 is in a non-working state, the third heat exchanger 150 is used as a condenser to release heat, the radiator 3121 is in a heat absorption state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a non-working state, the second expansion valve 160 is in a working state, the first water pump 210 is in a non-working state, the second water pump 3112 is in a working state, the third water pump 322 is in a working state, the first connecting opening 1b of the four-way proportional valve 314 communicates with the fourth connecting opening 4b, the first opening 1c of the second four-way valve 330 communicates with the second opening 2c, and the third opening 3c communicates with the fourth opening 4c.

In this mode, as shown in Fig. 16, in the refrigerant circulation system 10, the high-temperature and high-pressure gaseous refrigerant flowing out of the compressor 110 flows into the refrigerant channel in the third heat exchanger 150 through the first interface 1a and the second interface 2a of the first four-way valve 170, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerant flowing out of the second expansion valve 160 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat and the heat in the external environment through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the second water pump 3112 conveys the electric drive cooling liquid subjected to heat exchange and cooling by the first heat exchanger 120 sequentially to the charging unit 3111a, the electric drive member 3111b, the radiator 3121, the first connecting opening 1b of the four-way proportional valve 314, the fourth connecting opening 4b, the first opening 1c of the second four-way valve 330 and the second opening 2c, and then, the electric drive cooling liquid returns to the second water pump 3112, so as to complete the circulation of the electric drive cooling liquid. The third water pump 322 conveys the battery cooling liquid subjected to heat exchange and heating by the third heat exchanger 150 sequentially to the cooling liquid channel of the battery 321, the third opening 3c of the second four-way valve 330 and the fourth opening 4c, and then, the battery cooling liquid returns to the third water pump 322, so as to complete the circulation of the battery cooling liquid. In this process, the first heat exchanger 120 absorbs the electric drive excess heat and the heat absorbed by the radiator 3121 from the external environment, and exchanges heat with the third heat exchanger 150 to transmit the heat into the battery 321, so as to heat the battery 321.

4.4 Battery being heated by heat pump system (refrigerant self-circulation technology) mode: At this time, the cold-hot core 220 is in a non-working state, the first heat exchanger 120 is used as an evaporator to absorb heat, the second heat exchanger 140 is in a non-working state, the third heat exchanger 150 is used as a condenser to release heat, the radiator 3121 is in a non-working state, the hot core 3131 is in a non-working state, the compressor 110 is in a working state, the first interface 1a of the first four-way valve 170 communicates with the second interface 2a, the third interface 3a communicates with the fourth interface 4a, the first expansion valve 130 is in a non-working state, the second expansion valve 160 is in a working state, the first water pump 210 is in a non-working state, the second water pump 3112 is in a working state, the third water pump 322 is in a working state, the third connecting opening 3b of the four-way proportional valve 314 communicates with the fourth connecting opening 4b, the first opening 1c of the second four-way valve 330 communicates with the fourth opening 4c, and the third opening 3c communicates with the second opening 2c.

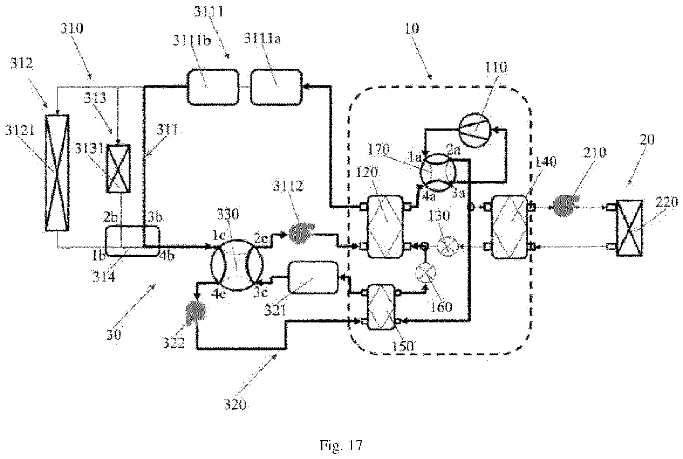

In this mode, as shown in Fig. 17, in the refrigerant circulation system 10, the high-temperature and high-pressure gaseous refrigerant flowing out of the compressor 110 flows into the refrigerant channel in the third heat exchanger 150 through the first interface 1a and second interface 2a of the first four-way valve 170, and the heat is transmitted to the battery cooling liquid in the third heat exchanger 150, so that the third heat exchanger 150 is used as a condenser to release heat to the battery 321. The refrigerant flowing out of the refrigerant channel of the third heat exchanger 150 becomes a low-temperature and high-pressure liquid refrigerant which then passes through the second expansion valve 160 to become a low-temperature and low-pressure liquid refrigerant. Then, the low-temperature and low-pressure liquid refrigerant flowing out of the second expansion valve 160 flows into the refrigerant channel in the first heat exchanger 120, and the refrigerant in the first heat exchanger 120 exchanges heat with the electric drive cooling liquid, so that the first heat exchanger 120 is used as an evaporator to absorb the electric drive excess heat through the engine room cooling liquid circulation system 30. The refrigerant flowing out of the refrigerant channel in the first heat exchanger 120 becomes a high-temperature and low-pressure liquid refrigerant which then flows into the compressor 110 through the fourth interface 4a and the third interface 3a of the first four-way valve 170 and becomes a high-temperature and high-pressure gaseous refrigerant through the compressor 110, so as to perform the next circulation flow.

In the cooling liquid circulation system, the second water pump 3112 conveys the electric drive cooling liquid subjected to heat exchange and cooling by the first heat exchanger 120 sequentially to the charging unit 3111a, the electric drive member 3111b, the third connecting opening 3b of the four-way proportional valve 314, the fourth connecting opening 4b, the first opening 1c of the second four-way valve 330, the fourth opening 4c, the third water pump 322, the battery cooling liquid channel of the third heat exchanger 150, the cooling liquid channel of the battery 321, the third opening 3c of the second four-way valve 330 and the second opening 2c, and then, the electric drive cooling liquid returns to the second water pump 3112, so as to complete the circulation of the cooling liquid. In this process, the first heat exchanger 120 and the third heat exchanger 150 are connected in series, and the electric drive excess heat can be absorbed. Moreover, during heat circulation of the first heat exchanger 120 and the third heat exchanger 150, the heat is transmitted into the battery 321 to heat the battery 321.

### Embodiment 2

This embodiment provides a vehicle, including the thermal management system of the vehicle in Embodiment 1.

Specifically, as shown in Fig. 1 to Fig. 17, the thermal management system of the vehicle involves components such as an air conditioner of a vehicle, a motor arranged in an engine room, a charger, a battery 321 and the like, and selectively communicates various loops among the refrigerant circulation system 10, the passenger compartment cooling liquid circulation system 20 and the engine room cooling liquid circulation system 30 by controlling the communication and blocking among different openings of the first four-way valve 170, the second four-way valve 330 and the four-way proportional valve 314, so as to perform thermal management of the passenger compartment and engine room of the vehicle. In the thermal management system of the vehicle, an environmentally-friendly refrigerant with flammability can exchange heat through two loops connected in parallel to avoid the danger of combustion caused by excessive refrigerant filling and leakage into the passenger compartment. Therefore, the thermal management system of the vehicle has the advantage of being applicable to refrigerants needing secondary loops. Moreover, the thermal management system of the vehicle can complete the cooling or heating of the passenger compartment and battery 321 through the heat exchange of the heat exchanger by controlling the flow direction of the refrigerant, without the need to additionally provide components such as electric heaters on the sides of the passenger compartment and the battery 321, thereby greatly reducing the number of parts in the thermal management system of the vehicle, and greatly reducing the complexity of the loop. In addition, the thermal management system of the vehicle generates heat through a self-circulation process of the refrigerant, without the need for high-speed rotating components such as motors to generate heat, so the reliability of the refrigerant circulation system 10 is higher. Furthermore, the heating efficiency is also higher than the heating efficiency of motor stalling. Moreover, the distribution of the heat and cold energy in the cooling liquid circulation system of the thermal management system of the vehicle is achieved by controlling a simple valve body, so that the thermal management system of the vehicle also has the advantage of simple overall structure.

Although the present invention has been illustrated and described with reference to some preferred implementations of the present invention, those of ordinary skill in the art should understand that the above content is a further detailed explanation of the present invention based on specific implementations, and it cannot be assumed that the specific implementations of the present invention are limited to these explanations. Those skilled in the art can make various changes in form and detail, including making several simple deductions or substitutions, without departing from the spirit and scope of the present invention.

## Claims

1. A thermal management system of a vehicle, comprising:
a refrigerant circulation system, wherein the refrigerant circulation system comprises a compressor, a first heat exchanger, a first expansion valve, a second heat exchanger, a third heat exchanger, a second expansion valve and a first flow path switching component; the first heat exchanger has a refrigerant channel and an electric drive cooling liquid channel which are independent of each other and capable of transferring heat; the second heat exchanger has a refrigerant channel and a passenger compartment cooling liquid channel which are independent of each other and capable of transferring heat; the third heat exchanger has a refrigerant channel and a battery cooling liquid channel which are independent of each other and capable of transferring heat;
a first end of the refrigerant channel of the first heat exchanger is respectively connected with a first end of the first expansion valve and a first end of the second expansion valve; a second end of the first expansion valve is connected with a first end of the refrigerant channel of the second heat exchanger, a second end of the second expansion valve is connected with a first end of the refrigerant channel of the third heat exchanger, and the first expansion valve and the second expansion valve are arranged in a parallel manner;
the first flow path switching component is arranged among the compressor, a second end of the refrigerant channel of the first heat exchanger, a second end of the refrigerant channel of the second heat exchanger and a second end of the refrigerant channel of the third heat exchanger, so as to selectively communicate the second end of the refrigerant channel of the second heat exchanger, a first end of the compressor, a second end of the compressor and the second end of the refrigerant channel of the first heat exchanger in sequence, and communicate the second end of the refrigerant channel of the third heat exchanger, the first end of the compressor, the second end of the compressor and the second end of the refrigerant channel of the first heat exchanger in sequence, so that the first heat exchanger can be used as a condenser, and both the second heat exchanger and the third heat exchanger can be used as evaporators; or communicate the second end of the refrigerant channel of the first heat exchanger, a first end of the compressor, a second end of the compressor and the second end of the refrigerant channel of the second heat exchanger in sequence, and communicate the second end of the refrigerant channel of the first heat exchanger, the first end of the compressor, the second end of the compressor and the second end of the refrigerant channel of the third heat exchanger in sequence, so that the first heat exchanger can be used as an evaporator, and both the second heat exchanger and the third heat exchanger can be used as condensers; and
a cooling liquid circulation system, wherein the cooling liquid circulation system comprises:
a passenger compartment cooling liquid circulation system, the passenger compartment cooling liquid channel of the second heat exchanger being connected with the passenger compartment cooling liquid circulation system; and
an engine room cooling liquid circulation system, the engine room cooling liquid circulation system comprising an electric drive circulation loop and a battery circulation loop, wherein
a first end of the electric drive circulation loop is connected with a first end of the electric drive cooling liquid channel of the first heat exchanger, and a second end of the electric drive circulation loop is connected with a second end of the electric drive cooling liquid channel of the first heat exchanger; and
a first end of the battery circulation loop is connected with a first end of the battery cooling liquid channel of the third heat exchanger, and a second end of the battery circulation loop is connected with a second end of the battery cooling liquid channel of the third heat exchanger.

2. The thermal management system of the vehicle according to claim 1, wherein the passenger compartment cooling liquid circulation system comprises a first water pump and a cold-hot core; and an output end of the first water pump communicates with an input end of the cold-hot core, an output end of the cold-hot core communicates with an input end of the passenger compartment cooling liquid channel of the second heat exchanger, and an output end of the passenger compartment cooling liquid channel of the second heat exchanger communicates with an input end of the first water pump.

3. The thermal management system of the vehicle according to claim 1, wherein the first flow path switching component is configured as a first four-way valve;
the first four-way valve has a first interface, a second interface, a third interface and a fourth interface, the first interface is connected with the second end of the compressor, the second interface is respectively connected with the second end of the refrigerant channel of the second heat exchanger and the second end of the refrigerant channel of the third heat exchanger, the third interface is connected with the first end of the compressor, and the fourth interface is connected with the second end of the refrigerant channel of the first heat exchanger;
when the first interface of the first four-way valve communicates with the fourth interface and the second interface communicates with the third interface, the second end of the refrigerant channel of the second heat exchanger, the second interface of the first four-way valve, the third interface, the first end of the compressor, the second end of the compressor, the first interface of the first four-way valve, the fourth interface, the second end of the refrigerant channel of the first heat exchanger, the first end of the refrigerant channel of the first heat exchanger, the first expansion valve and the first end of the refrigerant channel of the second heat exchanger can communicate in sequence to form a first refrigerant circulation loop, and the second end of the refrigerant channel of the third heat exchanger, the second interface of the first four-way valve, the third interface, the first end of the compressor, the second end of the compressor, the first interface of the first four-way valve, the fourth interface, the second end of the refrigerant channel of the first heat exchanger, the first end of the refrigerant channel of the first heat exchanger, the second expansion valve and the first end of the refrigerant channel of the third heat exchanger can communicate in sequence to form a second refrigerant circulation loop; and
when the first interface of the first four-way valve communicates with the second interface and the third interface communicates with the fourth interface, the second end of the refrigerant channel of the first heat exchanger, the fourth interface of the first four-way valve, the third interface, the first end of the compressor, the second end of the compressor, the first interface of the first four-way valve, the second interface, the second end of the refrigerant channel of the second heat exchanger, the first end of the refrigerant channel of the second heat exchanger, the first expansion valve and the first end of the refrigerant channel of the first heat exchanger can communicate in sequence to form a third refrigerant circulation loop, and the second end of the refrigerant channel of the first heat exchanger, the fourth interface of the first four-way valve, the third interface, the first end of the compressor, the second end of the compressor, the first interface of the first four-way valve, the second interface, the second end of the refrigerant channel of the third heat exchanger, the first end of the refrigerant channel of the third heat exchanger, the second expansion valve and the first end of the refrigerant channel of the first heat exchanger can communicate in sequence to form a fourth refrigerant circulation loop.

4. The thermal management system of the vehicle according to any one of claims 1 to 3, wherein the engine room cooling liquid circulation system further comprises a second flow path switching component; and
the second flow path switching component is arranged between the electric drive circulation loop and the battery circulation loop, so as to selectively arrange the electric drive circulation loop and the battery circulation loop in a mutually independent manner, or arrange the electric drive circulation loop and the battery circulation loop in a serial manner.

5. The thermal management system of the vehicle according to claim 4, wherein the electric drive circulation loop comprises an electric drive cooling liquid flow path and a radiating flow path, the electric drive cooling liquid flow path comprises an electric drive assembly and a second water pump which are connected in a serial manner, and the radiating flow path comprises a radiator;
the electric drive circulation loop further comprises a third flow path switching component, and the third flow path switching component is arranged between the electric drive cooling liquid flow path and the radiating flow path, so as to selectively communicate the electric drive cooling liquid flow path independently and bypass the radiating flow path, or arrange the electric drive cooling liquid flow path and the radiating flow path in a serial manner; and
a first end of the electric drive cooling liquid flow path forms the first end of the electric drive circulation loop, and a second end of the electric drive cooling liquid flow path forms the second end of the electric drive circulation loop.

6. The thermal management system of the vehicle according to claim 5, wherein the electric drive circulation loop further comprises a hot core flow path, and the hot core flow path comprises a hot core; and
the hot core is arranged between the electric drive assembly and the third flow path switching component, so that the third flow path switching component can also selectively arrange the electric drive cooling liquid flow path and the hot core flow path in a serial manner.

7. The thermal management system of the vehicle according to claim 6, wherein the battery circulation loop comprises a battery and a third water pump which are connected in a serial manner; and a second end of the third water pump is connected with the first end of the battery cooling liquid channel of the third heat exchanger, the second end of the battery cooling liquid channel of the third heat exchanger is connected with a first end of a cooling liquid channel of the battery, and a second end of the cooling liquid channel of the battery is connected with a first end of the third water pump through the second flow path switching component, so as to selectively communicate the second end of the cooling liquid channel of the battery with the first end of the third water pump, so that the electric drive circulation loop and the battery circulation loop are arranged in a mutually independent manner, or a second end of the cooling liquid channel of the battery communicates with a first end of the second water pump through the second flow path switching component, so as to selectively communicate the second end of the cooling liquid channel of the battery with the first end of the second water pump, so that the electric drive circulation loop and the battery circulation loop are arranged in a serial manner.

8. The thermal management system of the vehicle according to claim 7, wherein the second flow path switching component is configured as a second four-way valve;
the second four-way valve has a first opening, a second opening, a third opening and a fourth opening, the first opening is connected with the third flow path switching component, the second opening is connected with the first end of the second water pump, the third opening is connected with the second end of the cooling liquid channel of the battery, and the fourth opening is connected with the first end of the third water pump;
when the first opening of the second four-way valve communicates with the second opening and the third opening communicates with the fourth opening, the electric drive circulation loop and the battery circulation loop are arranged in the mutually independent manner; and
when the first opening of the second four-way valve communicates with the fourth opening and the third opening communicates with the second opening, the electric drive circulation loop and the battery circulation loop are arranged in the serial manner.

9. The thermal management system of the vehicle according to claim 8, wherein the third flow path switching component is configured as a four-way proportional valve;
the four-way proportional valve has a first connecting opening, a second connecting opening, a third connecting opening and a fourth connecting opening, the first connecting opening is connected with a second end of the radiator, the second connecting opening is connected with a second end of the hot core, the third connecting opening is connected with a second end of the electric drive assembly, and the fourth connecting opening is connected with the first opening of the second four-way valve; a first end of the electric drive assembly is connected with the first end of the electric drive cooling liquid channel of the first heat exchanger, a first end of the radiator is connected with the second end of the electric drive assembly, and a first end of the hot core is connected with the second end of the electric drive assembly;
when the first connecting opening of the four-way proportional valve communicates with the fourth connecting opening, the electric drive cooling liquid flow path and the radiating flow path are arranged in the serial manner;
when the first connecting opening and the second connecting opening of the four-way proportional valve proportionally communicate with the fourth connecting opening, the electric drive cooling liquid flow path is respectively arranged proportionally with the radiating flow path and the hot core flow path in the serial manner;
when the third connecting opening of the four-way proportional valve communicates with the fourth connecting opening, the electric drive cooling liquid flow path is independently communicated and the radiating flow path and the hot core flow path are bypassed; and
when the first connecting opening and the third connecting opening of the four-way proportional valve proportionally communicate with the fourth connecting opening, a part of the electric drive cooling liquid flow path is proportionally and independently communicated and the radiating flow path and the hot core flow path are bypassed, and the other part of the electric drive cooling liquid flow path and the radiating flow path are arranged in a serial manner.

10. The thermal management system of the vehicle according to claim 9, wherein the electric drive assembly comprises a charging unit and an electric drive member, a first end of the charging unit is connected with the first end of the electric drive cooling liquid channel of the first heat exchanger, a second end of the charging unit is connected with a first end of the electric drive member, and a second end of the electric drive member is respectively connected with the third connecting opening of the four-way proportional valve, the first end of the radiator and the first end of the hot core.

11. A vehicle, comprising the thermal management system of a vehicle according to any one of claims 1 to 10.
